# EUROPEAN PATENT APPLICATION

(11) **EP 4 580 287 A1**
(43) Date of publication of application: **02.07.2025**
(21) Application number: 23867286.9
(22) Date of filing: 06.09.2023
(51) Int. Cl.: H04W 72/12

(54) **DATA SCHEDULING METHOD AND APPARATUS FOR COORDINATED TRANSMISSION**

(30) Priority: 24.09.2022 CN 202211168771
(71) Applicant: Huawei Technologies Co., Ltd., Shenzhen, Guangdong 518129 (CN)
(72) Inventor: WANG, Hanqing, Shenzhen, Guangdong 518129 (CN); WANG, Xiaohan, Shenzhen, Guangdong 518129 (CN); JIN, Huangping, Shenzhen, Guangdong 518129 (CN)
(74) Representative: MERH-IP Matias Erny Reichl Hoffmann Patentanwälte PartG mbB
(86) International application number: PCT/CN2023/117193
(87) International publication number: WO 2024/060995

(57) **Abstract**

This application provides a data scheduling method and apparatus for coordinated transmission. A terminal device performs uniform processing on initial scheduling information of coordinated network devices, to ensure that scheduling information of the coordinated network devices is unified, thereby implementing coordinated transmission between coordinated devices in a non-ideal backhaul. The method includes: The terminal device receives N pieces of initial scheduling information from N network devices, sends coordinated transmission scheduling information and first indication information, and performs data transmission with M network devices on a time-frequency resource for coordinated transmission. One of the N pieces of initial scheduling information is from one of the N network devices, the N network devices are in one-to-one correspondence with the N pieces of initial scheduling information, the coordinated transmission scheduling information is determined by the terminal device based on the N pieces of initial scheduling information, the first indication information indicates information about the N network devices, N is an integer greater than 1, M is an integer greater than or equal to N, and the M network devices include the N network devices.

## Description

This application claims priority to Chinese Patent Application No. 202211168771.2, filed with the China National Intellectual Property Administration on September 24, 2022 and entitled "DATA SCHEDULING METHOD AND APPARATUS FOR COORDINATED TRANSMISSION", which is incorporated herein by reference in its entirety.

### TECHNICAL FIELD

This application relates to the field of wireless communication technologies, and more specifically, to a data scheduling method and apparatus for coordinated transmission.

### BACKGROUND

In coherent joint transmission (coherent joint transmission, CJT), network devices serving one terminal device jointly transmit same data to the terminal device through coordination. Data transmission performance of a communication system can be significantly improved through coordinated transmission. To ensure a coherent superposition effect, on the terminal device, of signals transmitted by a plurality of network devices participating in coordinated transmission, it needs to be ensured that scheduling information of the network devices is unified. To be specific, different network devices schedule a same time-frequency resource for the terminal device, and use a same modulation and coding scheme (modulation and coding scheme, MCS) order and a same transport layer quantity. Therefore, the plurality of network devices participating in coordinated transmission need to exchange respective scheduling information through a low-delay backhaul (backhaul, BH), that is, an ideal backhaul is needed between the network devices, so that the plurality of network devices obtain unified (unified) scheduling information through coordination.

As a radio access network is IP (internet protocol)-based, an IP radio access network (IP radio access network, IPRAN) is widely used in all countries around the world. An enabling technology of CJT between network devices in an IPRAN networking scenario has attracted wide attention. However, a backhaul between the network devices in the IPRAN networking scenario is non-ideal, and a backhaul link is featured in a high delay, that is, information exchange between the network devices has a high exchange delay. This cannot meet a requirement of a CJT technology for a low information exchange delay. Therefore, how to implement CJT between coordinated network devices in a non-ideal backhaul is an urgent problem to be resolved.

### SUMMARY

This application provides a data scheduling method and apparatus for coordinated transmission. A terminal device performs uniform processing on resources of coordinated network devices, and sends a unified resource to the coordinated network devices in a communication system, to ensure that scheduling information of the coordinated network devices serving the terminal device is unified, thereby implementing CJT between coordinated devices in a non-ideal backhaul.

According to a first aspect, an embodiment of this application provides a data scheduling method for coordinated transmission. The method may be performed by a terminal device or a component (such as a chip or a chip system) of the terminal device. This is not limited in this application. The method includes: The terminal device receives N pieces of initial scheduling information from N network devices, where one of the N pieces of initial scheduling information is from one of the N network devices, the initial scheduling information includes an initial time-frequency resource, an initial modulation and coding scheme MCS order, and an initial transport layer quantity, and the N network devices are in one-to-one correspondence with the N pieces of initial scheduling information. The terminal device sends coordinated transmission scheduling information and first indication information, where the coordinated transmission scheduling information includes a time-frequency resource for coordinated transmission, an MCS order for coordinated transmission, and a transport layer quantity for coordinated transmission, the coordinated transmission scheduling information is determined based on the N pieces of initial scheduling information, and the first indication information indicates information about the N network devices. The terminal device performs data transmission with M network devices on the time-frequency resource for coordinated transmission, where N is an integer greater than 1, M is an integer greater than or equal to N, and the M network devices include the N network devices.

It should be noted that one of the N pieces of initial scheduling information is for scheduling of coordinated transmission indicated by a network device corresponding to the piece of initial scheduling information. In other words, initial scheduling information corresponding to one of the N network devices indicates the scheduling of the coordinated transmission, and the coordinated transmission includes CJT and CJR.

Based on this solution, according to the data scheduling method for coordinated transmission provided in this embodiment of this application, the terminal device processes scheduling information of the network devices to determine unified scheduling information, so that the network devices can implement coordinated transmission between coordinated devices in a non-ideal backhaul by using the same scheduling information. In addition, a service status and a channel condition of each network device can be comprehensively considered through scheduling, thereby achieving an effect of improving system transmission performance. In addition, the first indication information sent to each coordinated network device indicates a network device corresponding to the coordinated transmission scheduling information, so that a network device that receives the first indication information can flexibly determine, depending on whether the first indication information includes the network device, whether to participate in the coordinated transmission. For example, when a channel condition between a network device and the terminal device is not good, the terminal device may probably fail to receive initial scheduling information of the network device. As a result, when determining the coordinated transmission scheduling information, the terminal device cannot use the initial scheduling information delivered by the network device. Therefore, information about the network device does not exist in the coordinated transmission scheduling information received by the network device. In this case, the network device may allocate a resource to another terminal device, so that the resource is more properly utilized.

With reference to the first aspect, in some implementations of the first aspect, that the terminal device receives N pieces of initial scheduling information from N network devices includes: The terminal device receives N pieces of downlink control information DCI from the N network devices, where one of the N pieces of DCI is from one of the N network devices, and the DCI includes the initial scheduling information.

Based on this solution, sending of the initial scheduling information implemented by using the DCI can be compatible with a solution in which scheduling information is transmitted by using DCI in a current communication system.

With reference to the first aspect, in some implementations of the first aspect, the first indication information is indexes CORESETPOOLIndex of N control resource set pools corresponding to the N pieces of DCI sent by the N network devices.

Based on this solution, the network device is indicated by using CORESETPOOLIndex, so that existing information in the DCI can be fully utilized to generate the first indication information in this application, thereby achieving compatibility between this solution and a conventional technology.

With reference to the first aspect, in some implementations of the first aspect, the first indication information is identifiers of the N network devices.

With reference to the first aspect, in some implementations of the first aspect, the DCI further includes second indication information, and the second indication information indicates that the DCI includes the initial scheduling information.

Optionally, the second indication information may be indication information carried in a redefined field in the DCI.

With reference to the first aspect, in some implementations of the first aspect, the second indication information is a radio network temporary identifier RNTI, and the RNTI is used to scramble a cyclic redundancy check CRC code of the DCI.

Specifically, the second indication information may be the radio network temporary identifier (radio network temporary identifier, RNTI) used to scramble the cyclic redundancy check (cyclic redundancy check, CRC) code of the DCI. That is, the CRC of the DCI is scrambled by using a specific RNTI. After obtaining, through detection, the DCI corresponding to the CRC scrambled by using the specific RNTI, the terminal device may learn that information carried in the DCI includes the initial scheduling information.

Based on this solution, the second indication information in the DCI indicates that the DCI carries the initial scheduling information, so that after receiving the DCI, the terminal device can determine, based on the second indication information in the DCI, that scheduling information carried in the DCI is the initial scheduling information, and determine the coordinated transmission scheduling information by using the obtained N pieces of initial scheduling information, to ensure communication reliability.

With reference to the first aspect, in some implementations of the first aspect, the second indication information further indicates that the initial scheduling information is scheduling information of coherent joint transmission CJT or scheduling information of coherent joint reception CJR.

It should be noted that in this embodiment of this application, the scheduling information of the coherent joint transmission CJT or the scheduling information of the coherent joint reception CJR means that the terminal device needs to process the initial scheduling information.

Based on this solution, the second indication information indicates that scheduling information carried in the DCI is the initial scheduling information, and indicates that the initial scheduling information is the scheduling information of the CJT or the scheduling information of the CJR, so that the terminal device can obtain two types of information through parsing once, to reduce processing complexity of the terminal device. With reference to the first aspect, in some implementations of the first aspect, the DCI further includes third indication information, and the third indication information indicates that the initial scheduling information is the scheduling information of the coherent joint transmission CJT or the scheduling information of the coherent joint reception CJR.

Based on this solution, the third indication information in the DCI indicates that the initial scheduling information carried in the DCI is the scheduling information of the coherent transmission CJT or the scheduling information of the CJR, so that after receiving the DCI, the terminal device can process the N pieces of initial scheduling information based on the third indication information in the DCI, and then generate the coordinated transmission scheduling information conducive to the CJT or the CJR, to ensure communication reliability.

With reference to the first aspect, in some implementations of the first aspect, that the first indication information indicates information about the N network devices includes: The first indication information indicates indexes of N control resource set pools corresponding to the N pieces of DCI of the N network devices.

With reference to the first aspect, in some implementations of the first aspect, that the terminal device sends coordinated transmission scheduling information and first indication information includes: The terminal device sends uplink control information UCI, where the UCI includes the coordinated transmission scheduling information and the first indication information.

With reference to the first aspect, in some implementations of the first aspect, the UCI is carried on an uplink time-frequency resource, and the uplink time-frequency resource is a time-frequency resource scheduled in a static or semi-persistent manner.

With reference to the first aspect, in some implementations of the first aspect, the UCI is carried on an uplink time-frequency resource, and the uplink time-frequency resource is a grant-free (grant-free) time-frequency resource.

With reference to the first aspect, in some implementations of the first aspect, the UCI further includes one of new data indication information and hybrid automatic repeat request information-acknowledgment HARQ-ACK resource indication information, where the new data indication information indicates whether transmission data scheduled by using the coordinated transmission scheduling information is data of initial transmission or data of non-initial transmission, and the HARQ-ACK resource indication information indicates a time-frequency resource for transmission of acknowledgment feedback information.

Based on this solution, the UCI that carries the coordinated transmission scheduling information is transmitted by using the uplink resource scheduled by each network device for the terminal device in the static or semi-persistent manner (for example, a grant-free manner), so that an additional interaction delay does not need to be introduced for allocation of the uplink resource, thereby improving communication efficiency.

With reference to the first aspect, in some implementations of the first aspect, the coordinated transmission scheduling information and the first indication information are carried in a response message, and the response message is a response message of fully radio resource control RRC signaling or a response message of media access control control element MAC-CE signaling.

With reference to the first aspect, in some implementations of the first aspect, the coordinated transmission scheduling information and the first indication information are carried on a time-frequency resource of a physical uplink shared channel PUSCH.

With reference to the first aspect, in some implementations of the first aspect, that the coordinated transmission scheduling information is determined based on the N pieces of initial scheduling information includes: The time-frequency resource for coordinated transmission in the coordinated transmission scheduling information is determined based on an intersection set or a union set of N initial time-frequency resources in the N pieces of initial scheduling information. The MCS order for coordinated transmission in the coordinated transmission scheduling information is a largest value in N initial MCS orders in the N pieces of initial scheduling information. The transport layer quantity for coordinated transmission in the coordinated transmission scheduling information is a largest value in N initial transport layer quantities in the N pieces of initial scheduling information.

With reference to the first aspect, in some implementations of the first aspect, that the terminal device performs data transmission with M network devices on the time-frequency resource for coordinated transmission includes: When the N pieces of initial scheduling information are used for CJT, the terminal device receives, on the time-frequency resource for coordinated transmission, same downlink data sent by the M network devices. Alternatively, when the N pieces of initial scheduling information are used for CJR, the terminal device sends uplink data on the time-frequency resource for coordinated transmission.

Based on the foregoing solution, the data scheduling method for coordinated transmission provided in this embodiment of this application is applicable to downlink data transmission, for example, CJT between network devices in a non-ideal backhaul scenario. In addition, this method is also applicable to uplink data transmission, for example, CJR between a plurality of network devices in the non-ideal backhaul scenario.

With reference to the first aspect, in some implementations of the first aspect, a time interval between sending the coordinated transmission scheduling information by the terminal device and performing data transmission with the M network devices by the terminal device on the time-frequency resource for coordinated transmission is T1.

It should be understood that, after receiving the coordinated transmission scheduling information, the network device may wait for the time T1 before performing data transmission with the terminal device. In this embodiment of this application, the time T1 is also referred to as first time.

Based on the foregoing solution, the time T1 is set, to ensure data synchronization between the network devices participating in the coordinated transmission, and improve system performance and reliability.

According to a second aspect, an embodiment of this application provides a data scheduling method for coordinated transmission. The method may be performed by a network device or a component (such as a chip or a chip system) of the network device. This is not limited in this application. The method includes: The network device sends initial scheduling information to a terminal device, where the initial scheduling information includes an initial time-frequency resource, an initial modulation and coding scheme MCS order, and an initial transport layer quantity. The network device receives coordinated transmission scheduling information and first indication information from the terminal device, where the coordinated transmission scheduling information includes a time-frequency resource for coordinated transmission, an MCS order for coordinated transmission, and a transport layer quantity for coordinated transmission, and the coordinated transmission scheduling information is determined based on N pieces of initial scheduling information. One of the N pieces of initial scheduling information is from one of N network devices, the N pieces of initial scheduling information are in one-to-one correspondence with the N network devices, and the first indication information indicates information about the N network devices. The network device performs data transmission with the terminal device on the time-frequency resource for coordinated transmission, where N is an integer greater than 1, the network device is one of M network devices, M is an integer greater than or equal to N, and the M network devices include the N network devices.

With reference to the second aspect, in some implementations of the second aspect, that the network device sends initial scheduling information to a terminal device includes: The network device sends downlink control information DCI to the terminal device, where the DCI includes the initial scheduling information.

With reference to the second aspect, in some implementations of the second aspect, the first indication information is indexes CORESETPOOLIndex of N control resource set pools corresponding to N pieces of DCI sent by the N network devices.

With reference to the second aspect, in some implementations of the second aspect, the first indication information is identifiers of the N network devices.

With reference to the second aspect, in some implementations of the second aspect, the DCI further includes second indication information, and the second indication information indicates that the DCI includes the initial scheduling information.

Optionally, the second indication information may be indication information carried in a redefined field in the DCI.

With reference to the second aspect, in some implementations of the second aspect, the second indication information is a radio network temporary identifier RNTI, and the RNTI is used to scramble a cyclic redundancy check CRC code of the DCI.

Specifically, the second indication information may be the RNTI used to scramble the CRC code of the DCI. That is, the CRC of the DCI is scrambled by using a specific RNTI. After obtaining, through detection, the DCI corresponding to the CRC scrambled by using the specific RNTI, the terminal device may learn that information carried in the DCI includes the initial scheduling information.

With reference to the second aspect, in some implementations of the second aspect, the second indication information further indicates that the initial scheduling information is scheduling information of coherent joint transmission CJT or scheduling information of coherent joint reception CJR.

It should be noted that in this embodiment of this application, the scheduling information of the coherent joint transmission CJT or the scheduling information of the coherent joint reception CJR means that the terminal device needs to process the initial scheduling information.

With reference to the second aspect, in some implementations of the second aspect, the DCI further includes third indication information, and the third indication information indicates that the initial scheduling information is the scheduling information of the coherent joint transmission CJT or the scheduling information of the coherent joint reception CJR.

With reference to the second aspect, in some implementations of the second aspect, that the first indication information indicates information about the N network devices includes: The first indication information indicates indexes of N control resource set pools corresponding to N pieces of DCI of the N network devices.

With reference to the second aspect, in some implementations of the second aspect, that the network device receives coordinated transmission scheduling information and first indication information from the terminal device includes: The network device receives uplink control information UCI from the terminal device, where the UCI includes the coordinated transmission scheduling information and the first indication information.

With reference to the second aspect, in some implementations of the second aspect, the UCI is carried on an uplink time-frequency resource, and the uplink time-frequency resource is a time-frequency resource scheduled by the network device for the terminal device in a static or semi-persistent manner.

With reference to the second aspect, in some implementations of the second aspect, the UCI is carried on an uplink time-frequency resource, and the uplink time-frequency resource is a grant-free (grant-free) time-frequency resource.

With reference to the second aspect, in some implementations of the second aspect, the UCI further includes one of new data indication information and hybrid automatic repeat request information-acknowledgment HARQ-ACK resource indication information, where the new data indication information indicates whether transmission data scheduled by using the coordinated transmission scheduling information is data of initial transmission or data of non-initial transmission, and the HARQ-ACK resource indication information indicates a time-frequency resource for transmission of acknowledgment feedback information.

For example, the network device may detect, in a manner such as periodic detection, whether the uplink time-frequency resource carries the UCI.

With reference to the second aspect, in some implementations of the second aspect, the coordinated transmission scheduling information and the first indication information are carried in a response message, and the response message is a response message of fully radio resource control RRC signaling or a response message of media access control control element MAC-CE signaling.

With reference to the second aspect, in some implementations of the second aspect, the coordinated transmission scheduling information and the first indication information are carried on a time-frequency resource of a physical uplink shared channel PUSCH.

With reference to the second aspect, in some implementations of the second aspect, that the coordinated transmission scheduling information is determined based on N pieces of initial scheduling information includes: The time-frequency resource for coordinated transmission in the coordinated transmission scheduling information is determined based on an intersection set or a union set of N initial time-frequency resources in the N pieces of initial scheduling information. The MCS order for coordinated transmission in the coordinated transmission scheduling information is a largest value in N initial MCS orders in the N pieces of initial scheduling information. The transport layer quantity for coordinated transmission in the coordinated transmission scheduling information is a largest value in N initial transport layer quantities in the N pieces of initial scheduling information.

With reference to the second aspect, in some implementations of the second aspect, that the network device performs data transmission with the terminal device on the time-frequency resource for coordinated transmission includes: When the initial scheduling information is used for CJT, the network device sends downlink data to the terminal device on the time-frequency resource for coordinated transmission. Alternatively, when the initial scheduling information is used for CJR, the network device receives uplink data from the terminal device on the time-frequency resource for coordinated transmission.

With reference to the second aspect, in some implementations of the second aspect, a time interval between receiving the coordinated transmission scheduling information by the network device and performing data transmission with the terminal device by the network device on the time-frequency resource for coordinated transmission is T1.

According to a third aspect, an embodiment of this application provides a data transmission system. The data transmission system includes a plurality of network devices, where the plurality of network devices are configured to perform data transmission with a terminal device, and the plurality of network devices are configured to perform the method provided in any one of the second aspect and the implementations of the second aspect.

With reference to the third aspect, in some implementations of the third aspect, when the plurality of network devices transmit downlink data to the terminal device, the plurality of network devices send same downlink data to the terminal device on a time-frequency resource for coordinated transmission. Alternatively, when the terminal device transmits uplink data to the plurality of network devices, the network devices receive the uplink data sent by the terminal device on a time-frequency resource for coordinated transmission.

It should be understood that data transmission between a plurality of network devices is in a non-ideal backhaul manner.

According to a fourth aspect, an embodiment of this application provides a data transmission apparatus. The apparatus is configured to perform the method provided in the first aspect. Specifically, the data transmission apparatus may include a unit and/or a module, for example, a processing unit and an obtaining unit, configured to perform the method provided in any one of the first aspect or the foregoing implementations of the first aspect.

In an implementation, the data transmission apparatus is a terminal device. The obtaining unit may be a transceiver or an input/output interface. The processing unit may be at least one processor. Optionally, the transceiver may be a transceiver circuit. Optionally, the input/output interface may be an input/output circuit.

In another implementation, the data transmission apparatus is a chip, a chip system, or a circuit in a terminal device. The obtaining unit may be an input/output interface, an interface circuit, an output circuit, an input circuit, a pin, a related circuit, or the like in the chip, the chip system, or the circuit. The processing unit may be at least one processor, a processing circuit, a logic circuit, or the like.

According to a fifth aspect, an embodiment of this application provides a data transmission apparatus. The apparatus is configured to perform the method provided in the second aspect. Specifically, the data transmission apparatus may include a unit and/or a module, for example, a processing unit and an obtaining unit, configured to perform the method provided in any one of the second aspect or the foregoing implementations of the second aspect.

In an implementation, the data transmission apparatus is a network device. The obtaining unit may be a transceiver or an input/output interface. The processing unit may be at least one processor. Optionally, the transceiver may be a transceiver circuit. Optionally, the input/output interface may be an input/output circuit.

**In** another implementation, the data transmission apparatus is a chip, a chip system, or a circuit in a network device. The obtaining unit may be an input/output interface, an interface circuit, an output circuit, an input circuit, a pin, a related circuit, or the like in the chip, the chip system, or the circuit. The processing unit may be at least one processor, a processing circuit, a logic circuit, or the like.

According to a sixth aspect, an embodiment of this application provides a processor, configured to perform the methods provided in the foregoing aspects.

Sending, obtaining/receiving, and other operations related to the processor may be understood as output, receiving/input, and other operations performed by the processor, or sending and receiving operations performed by a radio frequency circuit and an antenna, unless otherwise specified or the operations conflict with actual functions or internal logic of the operations in related descriptions. This is not limited in this application.

According to a seventh aspect, an embodiment of this application provides a computer-readable storage medium. The computer-readable storage medium stores program code executed by a device, and the program code is used to perform the method provided in any one of the first aspect or the second aspect and the implementations of the first aspect or the second aspect.

According to an eighth aspect, an embodiment of this application provides a computer program product including instructions. When the computer program product runs on a computer, the computer is enabled to perform the method provided in any one of the first aspect or the second aspect and the implementations of the first aspect or the second aspect.

According to a ninth aspect, an embodiment of this application provides a chip. The chip includes a processor and a communication interface. The processor reads, through the communication interface, instructions stored in a memory, to perform the method provided in any one of the first aspect or the second aspect and the implementations of the first aspect or the second aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the first aspect or the second aspect and the implementations of the first aspect or the second aspect.

According to a tenth aspect, an embodiment of this application provides a data transmission system, including the communication apparatus according to the fourth aspect and the data transmission apparatus according to the fifth aspect.

For specific beneficial effects brought by the second aspect to the tenth aspect, refer to the descriptions of the beneficial effects in the first aspect. Details are not described herein again.

### BRIEF DESCRIPTION OF DRAWINGS

FIG. 1 is a diagram of an architecture of a communication system 100 to which an embodiment of this application is applicable;
FIG. 2 is a schematic flowchart of a data scheduling method 200 for coordinated transmission according to an embodiment of this application;
FIG. 3 is a schematic flowchart of another data scheduling method 300 for coordinated transmission according to an embodiment of this application;
FIG. 4 is a diagram of an interaction delay comparison result in a data scheduling method for coordinated transmission and a scheduling manner of coordinated transmission based on BH interaction according to an embodiment of this application;
FIG. 5 is a block diagram of a communication apparatus 500 for data scheduling in coordinated transmission according to an embodiment of this application;
FIG. 6 is a diagram of a structure of another communication apparatus for data scheduling in coordinated transmission according to an embodiment of this application;
FIG. 7 is a diagram of a structure of an example of a network device according to an embodiment of this application; and
FIG. 8 is a diagram of a structure of an example of a terminal device according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a wireless-fidelity (wireless-fidelity, Wi-Fi) system, a 3rd generation partnership project (3rd generation partnership project, 3GPP)-related communication system, and another communication system (such as a 6G system) or a multiple communication convergence system that may appear in the future.

A terminal device in embodiments of this application is a device having a wireless transceiver function. For example, the terminal device may include a handheld device having a wireless connection function, or a processing device connected to a wireless modem. The terminal device may communicate with a core network through a radio access network (radio access network, RAN), and exchange voice and/or data with the RAN. The terminal device may be user equipment (user equipment, UE), a wireless terminal device, a mobile terminal device, a device-to-device (device-to-device, D2D) terminal device, a V2X terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal device may further include a mobile phone (or referred to as a "cellular" phone), a computer having a mobile terminal device, a portable, pocket-sized, handheld, or computer built-in mobile apparatus, or the like, for example, a device such as a personal communication service (personal communication service, PCS) phone. In addition, the terminal device may alternatively be a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. The terminal device may be fixed or movable.

It should be noted that in this application, an apparatus configured to implement a function of the terminal device may be the terminal device, or may be an apparatus that can support the terminal device in implementing the function, for example, a chip system. The apparatus may be installed in the terminal device. In this application, the chip system may include a chip, or may include a chip and another discrete component.

A network device in embodiments of this application is an access device that is in a mobile communication system and that is accessed by a terminal device in a wireless manner, and includes a radio access network device, for example, a base station. The network device may alternatively be a device that communicates with a terminal device through an air interface. The network device may include an evolved NodeB (evolved NodeB) in a long term evolution (long term evolution, LTE) system or long term evolution-advanced (long term evolution-advanced, LTE-A). The evolved NodeB may be referred to as an eNB or an e-NodeB for short. The eNB is an apparatus that is deployed in a radio access network, that meets a 4th generation (4th generation, 4G) mobile communication technology standard, and that provides a wireless communication function for the terminal device. Alternatively, the network device may be a new radio controller (new radio controller, NR controller), may be a base station (gNodeB, gNB) in a 5G system, may be a central unit (central unit), may be a new radio base station, may be a remote radio module, may be a micro base station (also referred to as a small cell), may be a relay (relay), may be a distributed unit (distributed unit), may be a macro base station in various forms, or may be a transmission reception point (transmission reception point, TRP), a reception point (reception point, RP), a transmission measurement function (transmission measurement function, TMF), a transmission point (transmission point, TP), or any other radio access device. Embodiments of this application are not limited thereto. The network device may also include a home base station (for example, a home evolved NodeB or a home NodeB, HNB), a baseband unit (baseband unit, BBU), a wireless fidelity (wireless fidelity, Wi-Fi) access point (access point, AP), or the like. A specific technology and a specific device form that are used by the network device are not limited in embodiments of this application. The network device may correspond to the eNB in a 4G system, and correspond to the gNB in the 5G system.

The base station in embodiments of this application may include a central unit (central unit, CU) and a distributed unit (distributed unit, DU), and a plurality of DUs may be centrally controlled by one CU. The CU and the DU may be divided based on functions that are of protocol layers of a wireless network and that are of the CU and the DU. For example, functions of a PDCP layer and a protocol layer above the PDCP layer are set on the CU, and functions of protocol layers below the PDCP layer, such as a radio link control (radio link control, RLC) layer and a media access control (media access control, MAC) layer, are set on the DU. It should be noted that such protocol layer division is merely an example, and division may be performed at another protocol layer. A radio frequency apparatus may be remotely disposed and not placed in the DU, may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, where the entities are respectively a control-plane CU entity (CU-CP entity) and a user-plane CU entity (CU-UP entity). In this network architecture, signaling generated by the CU may be sent to the terminal device through the DU, or signaling generated by UE may be sent to the CU through the DU. The DU may directly transparently transmit the signaling to the UE or the CU through protocol layer encapsulation without parsing the signaling. In this network architecture, the CU is classified as a network device on a radio access network (radio access network, RAN) side. In addition, the CU may alternatively be classified as a network device on a core network (core network, CN) side. This is not limited in this application.

The terminal device in embodiments of this application is connected to the radio access network device in a wireless manner, and the radio access network device is connected to a core network device in a wireless or wired manner. The core network device and the radio access network device may be independent and different physical devices, a function of the core network device and a logical function of the radio access network device may be integrated into a same physical device, or a part of functions of the core network device and a part of functions of the radio access network device may be integrated into one physical device. The terminal device may be stationary, or may be movable.

For ease of understanding of embodiments of this application, several terms in this application are first briefly described.
1. CJT: A plurality of network devices transmit data to one terminal device in a coherent transmission manner. All the plurality of network devices participating in coherent transmission obtain related data information (for example, data stream information and a precoding matrix) and channel state information (channel state information, CSI) between the plurality of network devices and the terminal device (for example, a covariance matrix of channels between the plurality of network devices and the terminal device). The plurality of network devices may be equivalent to a plurality of distributed antenna arrays, and jointly precode to-be-transmitted data at a same layer. The "coherent transmission" means that the plurality of network devices may jointly transmit same data, so that signals sent by the plurality of network devices can be superposed in a same phase when arriving at the terminal device, thereby greatly increasing power of a received signal and greatly reducing interference. In other words, a received signal to interference plus noise ratio of the terminal device can be greatly increased through the coherent transmission, thereby significantly improving data transmission performance.
2. Coherent joint reception (coherent joint reception, CJR): Information is exchanged between a plurality of coordinated network devices. The plurality of coordinated network devices jointly receive data sent by one terminal device served by the plurality of coordinated network devices, and perform collaborative processing on the received data, to form a network architecture in which a plurality of stations collaboratively receive information about a same terminal, so that reliability of an information transmission link can be improved without adding a hardware device of a network.
3. Uplink control information (uplink control information, UCI): The uplink control information is usually used to transmit a hybrid automatic repeat request (hybrid automatic repeat request, HARQ) information-acknowledgment (acknowledgment, ACK) or negative acknowledgment (negative acknowledgment, NACK) demodulated by using a physical downlink shared channel, a scheduling request (scheduling request, SR), CSI, and the like. The UCI may include one or more of the CSI, HARQ information, and the SR. The HARQ information may include the ACK or the NACK fed back for one or more physical downlink shared channels. The ACK may indicate that the physical downlink shared channel is successfully received, and data in the physical downlink shared channel is successfully decoded. The NACK may indicate that the physical downlink shared channel is not successfully received, or data in the physical downlink shared channel is not successfully decoded. A network device may perform data retransmission based on a NACK fed back by a terminal device. The SR is used by the terminal device to request the network device to allocate a physical uplink shared channel resource. The CSI may include one or more of a precoding matrix indicator (precoding matrix indicator, PMI), a rank indicator (rank indicator, RI), a channel quality indicator (channel quality indicator, CQI), and channel state information-reference signal (channel state information-reference signal, CSI-RS) resource indication information (CSI-RS resource indication, CRI). Based on different time domain behavior, the CSI may be further classified into periodic (periodic) CSI, semi-persistent (semi-persistent) CSI, and aperiodic (aperiodic) CSI.
4. Downlink control information (downlink control information, DCI): The downlink control information is control information used to schedule a downlink data channel (for example, a physical downlink shared channel) or an uplink data channel (for example, a physical uplink shared channel), other control information sent over a downlink, or the like.
5. Physical uplink control channel (physical uplink control channel, PUCCH): The physical uplink control channel can be used for UCI transmission. Based on content included in UCI, manners of determining a resource of the PUCCH used for the UCI transmission may be different.
6. Physical uplink shared channel (physical uplink shared channel, PUSCH): The physical uplink shared channel can be used for uplink data transmission. The PUSCH may be scheduled by a network device, for example, by using DCI on a PDCCH. This scheduling manner may be referred to as a dynamic grant (dynamic grant). The PUSCH may also have a configured grant (configured grant). The configured grant may be a fully radio resource control (radio resource control, RRC)-configured uplink grant (fully RRC-configured UL grant), and this grant manner may be referred to as type 1 PUSCH transmission with a configured grant (Type 1 PUSCH transmission with a configured grant). Alternatively, the configured grant may be a configured grant that needs to be triggered by the PDCCH, and this grant manner may be referred to as type 2 PUSCH transmission with a configured grant (Type 2 PUSCH transmission with a configured grant). Generally, for data scheduling with a high delay performance requirement, the dynamic grant may be used, and for data scheduling with a low delay performance requirement, the configured grant may be used. In addition, the configured grant is that the network device activates an uplink grant for a terminal device once, and when the terminal device receives no deactivation, the terminal device always uses a resource of the uplink grant to perform uplink transmission. The dynamic grant is that the network device needs to grant an each-time uplink transmission resource of the terminal device. It should be understood that the PUSCH grant manners listed above are merely examples, and the PUSCH grant manners are not limited in this application.

If the network device schedules the PUSCH by using the DCI, the network device may schedule the PUSCH by using, for example, a DCI format (format) 0_0 or a DCI format 0_1, and indicate a time domain position and a frequency domain position of the PUSCH in the DCI.

If the PUSCH is a PUSCH with the configured grant, the network device may configure a resource for the PUSCH with the configured grant by using, for example, a bandwidth part (bandwidth part, BWP) uplink dedicated parameter, for example, configure the resource by using a physical uplink shared channel control information element (PUSCH-Config IE) in a higher layer parameter. Parameters configured in the PUSCH-Config IE may include, for example, a data scrambling identifier, a demodulation reference signal (demodulation reference signal, DMRS) type, and power control.

7. Physical downlink shared channel (physical downlink shared channel, PDSCH): The physical downlink shared channel is used for downlink data transmission, and can also be used for transmission of a paging message and a part of system messages.

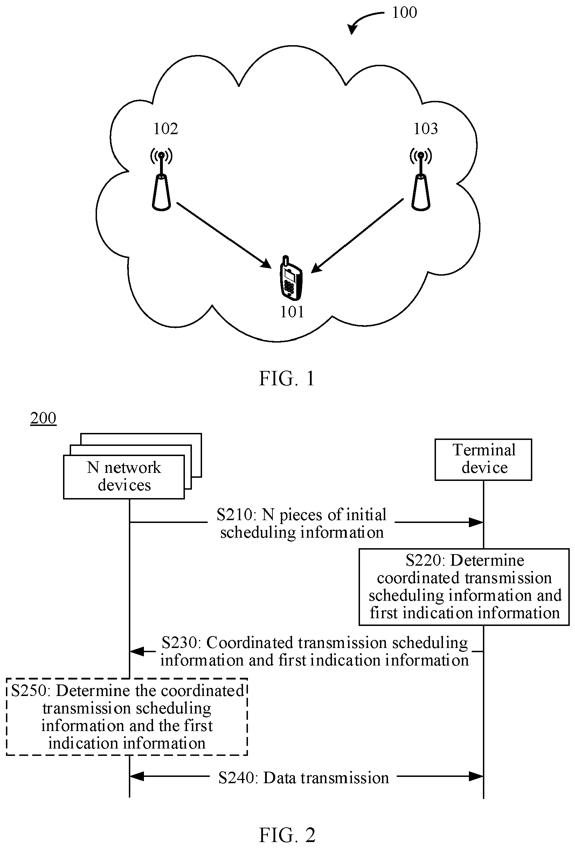

For ease of understanding of embodiments of this application, a communication system shown in FIG. 1 is first used as an example to describe in detail a communication system applicable to a method provided in embodiments of this application. FIG. 1 is a diagram of an architecture of a communication system 100 applicable to an embodiment of this application. As shown in the figure, the communication system 100 may include at least one terminal device, for example, a terminal device 101 shown in the figure. The communication system 100 may further include at least two network devices, for example, a network device 102 and a network device 103 shown in the figure. Information is exchanged between the network device 102 and the network device 103 by using a non-ideal BH. In the communication system 100, the network device 102 and the network device 103 may communicate with each other over a BH link. The BH link may be a wired BH link (for example, an optical fiber or a copper cable), or may be a wireless BH link (for example, a microwave). The network device 102 and the network device 103 may collaborate with each other to serve the terminal device 101. Therefore, the terminal device 101 may separately communicate with the network device 102 and the network device 103 over radio links. It should be noted that FIG. 1 is merely an example. In an actual communication system, three or more network devices may collaborate with each other to serve the terminal device 101.

Communication delays between the network devices that collaborate with each other may be classified into a communication delay in an ideal backhaul (ideal backhaul) and a communication delay in a non-ideal backhaul (non-ideal backhaul). For example, a communication delay between two stations in the ideal backhaul may be at a microsecond level, and can be ignored in comparison with that in millisecond-level data scheduling in NR. A communication delay between two stations in the non-ideal backhaul may be at a millisecond level, and cannot be ignored in comparison with that in millisecond-level data scheduling in NR.

It should be understood that in the non-ideal backhaul, when a network device and a terminal device perform coordinated transmission, a backhaul delay used for information exchange between network devices is high, in other words, there is a high delay in a process in which scheduling information is unified through interaction between the network devices. Consequently, it is difficult to implement CJT in a network communication system in the non-ideal backhaul.

In view of this, this application provides a data scheduling method for coordinated transmission, which is mainly applied to a wireless communication network in a non-ideal backhaul, for example, an IPRAN networking scenario in NR. A communication process occurs between a network device and a terminal device, and a plurality of network devices transmit data to one terminal device through CJT. Further, the data scheduling method for coordinated transmission provided in this application may be applied to CJR, to be specific, a scenario in which a plurality of network devices receive uplink data sent by one terminal device.

According to the data scheduling method for coordinated transmission provided in this application, the terminal device processes initial scheduling information delivered by the plurality of network devices, generates unified scheduling information, and then sends the unified scheduling information to the plurality of network devices. In this way, a network device receiving the unified scheduling information may send downlink data of the CJT or receive uplink data of the CJR based on the unified scheduling information. Because the plurality of network devices participating in the coordinated transmission (including the CJT and the CJR) schedule the downlink data of the CJT or the uplink data of the CJR by using the unified scheduling information, a case in which scheduling results are inconsistent when different network devices in the coordinated transmission independently schedule the downlink data or the uplink data can be avoided.

According to the data scheduling method for coordinated transmission provided in this application, the terminal device processes the initial scheduling information delivered by the network devices, and transmits the processed unified scheduling information to the plurality of network devices. In this process, scheduling information of the network devices is unified. This can not only implement the CJT in a non-ideal backhaul scenario, but also implement the CJR in the non-ideal backhaul scenario. In this way, user experience is improved while a data transmission delay is reduced.

For ease of understanding of embodiments of this application, the following several points are described.

First, in embodiments of this application, higher layer signaling is involved. The higher layer signaling may be, for example, a radio resource control (radio resource control, RRC) message, or may be other higher layer signaling. This is not limited in this application.

Second, in embodiments of this application, "indication" may include a direct indication and an indirect indication, or may include an explicit indication and an implicit indication. Information indicated by a piece of information (for example, indication information, an indication field, or configuration information described below) is referred to as to-be-indicated information. In a specific implementation process, the to-be-indicated information may be indicated in a plurality of manners. By way of example but not limitation, the to-be-indicated information may be directly indicated. For example, the to-be-indicated information or an index of the to-be-indicated information is indicated. Alternatively, the to-be-indicated information may be indicated indirectly by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of pieces of information that is pre-agreed on (for example, stipulated in a protocol), to reduce indication overheads to some extent.

Third, "first", "second", and various numbers in the following embodiments are merely used for distinguishing for ease of description, but are not intended to limit the scope of embodiments of this application. For example, the terms are used to distinguish between different indication information.

Fourth, in the following embodiments, "pre-obtained" or "preset" may include being indicated by a network device by using signaling or being predefined (for example, defined in a protocol), and may refer to being defined in a communication protocol and configured in an access network device and a terminal device in communication, or may refer to being determined and configured by a network device for a terminal device. "Configuration" may be explicit configuration performed by using signaling or implicit configuration performed by using other information. "Predefined" may be implemented by pre-storing corresponding code or a corresponding table in a device (for example, including the terminal device and the network device), or implemented in another manner that may indicate related information. A specific implementation of "predefined" is not limited in this application.

Fifth, a data scheduling method for coordinated transmission provided in this application is not only applicable to a TDD communication system, but also applicable to an FDD communication system.

Sixth, in embodiments of this application, coordinated transmission is involved, and the coordinated transmission includes CJT and CJR. The CJT is downlink data transmission in the coordinated transmission, and the CJR is uplink data transmission in the coordinated transmission.

The following describes in detail the data scheduling method for coordinated transmission provided in this application with reference to the accompanying drawings. Because one or more network devices in a wireless communication system may serve a same terminal device, any network device that is in the wireless communication system and that serves the same terminal device may communicate with the terminal device according to a communication method provided in this application. The communication between the network device and the terminal device may include: The network device sends downlink data to the terminal device (downlink communication), and the terminal device sends uplink data to the network device (uplink communication). Both the two types of communication are applicable to the data scheduling method for coordinated transmission provided in this application. The following uses an interaction process between one terminal device and N network devices (in correspondence with the following method 200) or one terminal device and M network devices (in correspondence with the following method 300) as an example to describe in detail the data scheduling method for coordinated transmission provided in embodiments of this application.

FIG. 2 is a schematic flowchart of a data scheduling method 200 for coordinated transmission according to an embodiment of this application from a perspective of device interaction. As shown in the figure, the method 200 may include S210 to S240. The following describes in detail the steps in the method 200.

S210: N network devices send N pieces of initial scheduling information to a terminal device.

Specifically, each of the N network devices sends initial scheduling information of the network device to the terminal device, one of the N pieces of initial scheduling information is from one of the N network devices, and the N network devices are in one-to-one correspondence with the N pieces of initial scheduling information. Correspondingly, the terminal device receives the N pieces of initial scheduling information from the N network devices. N is an integer greater than 1. The N pieces of initial scheduling information may be the same or may be different. Each of the N pieces of initial scheduling information includes an initial time-frequency resource, an initial MCS order, and an initial transport layer quantity that correspond to the initial scheduling information. It should be noted that a name of the initial scheduling information is merely an example, and another name, for example, start scheduling information or pre-scheduling information, may be alternatively used. This is not limited in this application.

It should be noted that the N network devices are network devices participating in the coordinated transmission. Optionally, the N network devices participating in the coordinated transmission are determined based on channels between the network devices and the terminal device, determined based on positions of the network devices, or determined according to a rule preset in a standard. Determining of the N network devices participating in the coordinated transmission is merely an example rather than a limitation. It should be understood that for CJT coordinated transmission, the N network devices participating in the coordinated transmission obtain and store data that needs to be sent to the terminal device.

For example, in a communication system, three network devices (a first network device, a second network device, and a third network device) participate in the coordinated transmission (that is, N is 3). Initial scheduling information sent by the three network devices to the terminal device is initial scheduling information #1, initial scheduling information #2, and initial scheduling information #3. The initial scheduling information #1 is corresponding initial scheduling information sent by the first network device to the terminal device, and the initial scheduling information #1 includes an initial time-frequency resource, an initial MCS order, and an initial transport layer quantity that are configured by the first network device for the terminal device. The initial scheduling information #2 is corresponding initial scheduling information sent by the second network device to the terminal device, and the initial scheduling information #2 includes an initial time-frequency resource, an initial MCS order, and an initial transport layer quantity that are configured by the second network device for the terminal device. The initial scheduling information #3 is corresponding initial scheduling information sent by the third network device to the terminal device, and the initial scheduling information #3 includes an initial time-frequency resource, an initial MCS order, and an initial transport layer quantity that are configured by the third network device for the terminal device.

Specifically, the initial time-frequency resource includes a time domain resource and a frequency domain resource. The time domain resource may be an orthogonal frequency division multiplexing (orthogonal frequency division multiplexing, OFDM) symbol, and the frequency domain resource may be a resource block (resource block, RB) or a resource block group (resource block group, RBG). The initial time-frequency resource is used to carry data on which transmission is performed between the network device corresponding to the initial scheduling information and the terminal device. The data may be downlink data, or may be uplink data. The initial MCS order is used to determine a modulation order and a channel code rate of a PDSCH or a PUSCH for data transmission. For example, modulation orders may be 2, 4, 6, and 8, which respectively correspond to quadrature phase shift keying (quadrature phase shift keying, QPSK), 16 quadrature amplitude phase modulation (16 quadrature amplitude modulation, 16QAM), 64 quadrature amplitude phase modulation (64 quadrature amplitude modulation, 64QAM), and 256 quadrature amplitude phase modulation (256 quadrature amplitude modulation, 256QAM). The channel code rate may be 490/1024, 948/1024, or the like. The initial transport layer quantity is a quantity of data streams of the downlink data sent by the network device to the terminal device, or a quantity of data streams of the uplink data sent by the terminal device, and may also be referred to as a quantity of initial transport layers, an initial transmission order, or an initial transmission rank (rank).

It should be understood that in the N network devices participating in the coordinated transmission, each network device may independently determine, based on a real-time service requirement and a channel condition between the network device and the terminal device, the initial scheduling information corresponding to the network device. Alternatively, after the N network devices exchange prior information between the network devices and the terminal device (for example, a channel covariance matrix corresponding to transmission channels between the network devices and the terminal device) by using a non-ideal BH, each network device determines the initial scheduling information of the network device based on a real-time service requirement, a channel condition between the network device and the terminal device, and a channel condition between another network device and the terminal device.

It should be noted that in this embodiment of this application, the initial scheduling information may be understood as scheduling information that cannot be directly used by the terminal device. To be specific, the terminal device cannot directly use the initial time-frequency resource, the initial MCS order, and the initial transport layer quantity that are included in each piece of initial scheduling information to perform data transmission with each network device, but needs to process the initial scheduling information to determine unified scheduling information. The terminal device needs to perform data transmission with each network device by using the unified scheduling information.

The N pieces of initial scheduling information may be completely the same, may be partially the same, or may be completely different. For example, when the pieces of initial scheduling information respectively corresponding to the N network devices are completely the same, where for example, the N network devices perform initial scheduling by using the prior information (for example, the channel covariance matrix corresponding to the transmission channels between the network devices and the terminal device), the N network devices configure a same initial time-frequency resource, a same initial MCS order, and a same initial transport layer quantity for the terminal device during the initial scheduling. When the pieces of initial scheduling information respectively corresponding to the N network devices are partially the same, any one or two of initial time-frequency resources, initial MCS orders, and initial transport layer quantities that are in the N pieces of initial scheduling information may be the same. When the pieces of initial scheduling information respectively corresponding to the N network devices are completely different, N initial time-frequency resources, N initial MCS orders, and N initial transport layer quantities that are in the N pieces of initial scheduling information sent by the N network devices are all different.

In an implementation, the N pieces of initial scheduling information sent by the N network devices are sent to the terminal device by using N pieces of DCI. To be specific, in this embodiment of this application, DCI sent by any network device to the terminal device may include initial scheduling information sent by the network device to the terminal device.

Optionally, an initial transport layer quantity included in the DCI may reuse an antenna port indication field in the DCI. For example, when any network device indicates, to the terminal device, that the initial transport layer quantity is 3, the network device may indicate that the initial transport layer quantity is 3 by using indication information that indicates, to the terminal device, that an antenna port quantity is 3 and that is in the DCI. Correspondingly, the terminal device may determine, based on the indication information indicating the antenna port quantity, that the antenna port quantity indicated by the network device is 3, and determine that the initial transport layer quantity is 3. In an implementation, the indication information that indicates the antenna port quantity to the terminal device and that is in the DCI indicates an index corresponding to the antenna port quantity, and a corresponding initial transport layer quantity is indicated by using a correspondence between the index and the antenna port quantity. In this case, when the antenna port quantity indicated by the indication information indicating the antenna port quantity corresponds to a plurality of indexes, the terminal device can determine a same initial transport layer quantity based on different indexes. That is, there may be a plurality of indexes indicated by indication information indicating a same initial transport layer quantity. In other words, the terminal device may determine the initial transport layer quantity based on any index value indicated by the indication information. For example, if indexes of three ports indicated by the indication information indicating the antenna port quantity are respectively 26, 28, and 30, when the terminal device obtains that an index indicated by the indication information indicating the antenna port quantity is any one of 26, 28, or 30, the terminal device may determine that an initial transport layer quantity configured by the network device for the terminal device is 3.

Alternatively, a transport layer quantity field in the DCI may indicate the initial transport layer quantity in the DCI.

It should be understood that the initial time-frequency resource in the initial scheduling information may be jointly indicated by a frequency domain resource indication field and a time domain resource indication field that are in the DCI. The MCS order in the initial scheduling information may be indicated by a byte in an MCS field in the DCI.

In addition, the DCI sent by any network device to the terminal device may further include second indication information indicating that the DCI carries the initial scheduling information corresponding to the network device. In other words, the second indication information indicates that the DCI includes the initial scheduling information corresponding to the network device. In other words, the second indication information indicates that scheduling information carried in the DCI is the initial scheduling information.

Optionally, the second indication information is indication information carried in a newly defined field in the DCI, for example, one bit included in an indication field occupied by the second indication information. For example, when a value of the bit is 0, it indicates that the DCI does not carry the initial scheduling information. When a value of the bit is 1, it indicates that the DCI carries the corresponding initial scheduling information.

Alternatively, the second indication information may be an RNTI used to scramble a CRC code of the DCI. That is, the CRC of the DCI is scrambled by using a specific RNTI. After obtaining, through detection, the DCI corresponding to the CRC code scrambled by using the specific RNTI, the terminal device may learn that information carried in the DCI includes the initial scheduling information.

It should be understood that a representation form of the second indication information is merely an example rather than a limitation.

Optionally, when the network device sends the initial scheduling information by using the DCI, the terminal device may distinguish, based on a DCI format (format) indication field in the DCI, whether the initial scheduling information is scheduling information of CJT or scheduling information of CJR. For example, a DCI format 0_0 indicates that the initial scheduling information is the scheduling information of the CJR, and a DCI format 1_0 indicates that the initial scheduling information is the scheduling information of the CJT. Alternatively, the initial scheduling information sent by the network device indicates that the initial scheduling is uplink scheduling or downlink scheduling, and this is predefined.

Optionally, the DCI sent by any network device to the terminal device further includes third indication information indicating that the initial scheduling information carried in the DCI is the scheduling information of the CJT or the scheduling information of the CJR, in other words, the third indication information indicates that the initial scheduling information carried in the DCI is used for scheduling of the CJT or scheduling of the CJR. Specifically, when the initial scheduling information delivered by any network device is used to schedule the downlink data, the third indication information indicates that the initial scheduling information is the scheduling information of the CJT. When the initial scheduling information delivered by any network device is used to schedule the uplink data, the third indication information indicates that the initial scheduling information is the scheduling information of the CJR.

Alternatively, the indication information (namely, the second indication information) indicating that the DCI carries the initial scheduling information may also indicate that the carried initial scheduling information is the scheduling information of the CJT or the scheduling information of the CJR. In other words, the second indication information included in the DCI can not only indicate that the DCI carries the initial scheduling information, but also indicate that the initial scheduling information is the scheduling information of the CJT or the scheduling information of the CJR. For example, when a quantity m of bits included in the indication field occupied by the second indication information is equal to 2, if a value of the indication field is 00, it indicates that the DCI does not carry the initial scheduling information. If a value of the indication field is 01, it indicates that the scheduling information carried in the DCI is the initial scheduling information, and the initial scheduling information is the scheduling information of the CJT. If a value of the indication field is 10, it indicates that the scheduling information carried in the DCI is the initial scheduling information, and the initial scheduling information is the scheduling information of the CJR.

It should be understood that a quantity of bits occupied by each piece of indication information and meanings corresponding to values of different indication fields are merely examples rather than limitations.

It should be noted that in this embodiment of this application, the scheduling information of the coherent joint transmission CJT or the scheduling information of the coherent joint reception CJR means that the terminal device needs to process the initial scheduling information.

In another implementation, the N pieces of initial scheduling information sent by the N network devices may alternatively be carried in configuration information sent by the corresponding network devices to the terminal device, in other words, the N network devices respectively send the N pieces of initial scheduling information to the terminal device by using respective configuration information. For example, the configuration information may be carried by using higher layer signaling or media access control control element (MAC control element, MAC-CE) signaling. Similarly, the second indication information and the third indication information may also be carried in the configuration information.

S220: The terminal device determines coordinated transmission scheduling information and first indication information.

Specifically, after receiving the N pieces of initial scheduling information sent by the N network devices, the terminal device determines the coordinated transmission scheduling information and the first indication information based on the N pieces of initial scheduling information. It should be noted that a name of the coordinated transmission scheduling information is merely an example, and another name, for example, unified scheduling information or collaborative transmission scheduling information, may be alternatively used. This is not limited in this application. The coordinated transmission scheduling information includes a time-frequency resource for coordinated transmission, an MCS order for coordinated transmission, and a transport layer quantity for coordinated transmission. The first indication information indicates information about the N network devices corresponding to the N pieces of initial scheduling information.

For example, when the terminal device determines the time-frequency resource for coordinated transmission, when high bandwidth is needed for data coordinated transmission, the terminal device may use a union set of the N initial time-frequency resources in the N pieces of initial scheduling information corresponding to the N network devices as the time-frequency resource for coordinated transmission; the terminal device may first obtain a union set of the N initial time-frequency resources delivered by the N network devices, and determine the time-frequency resource for coordinated transmission based on a subset of the union set; if there is a limitation on time-frequency resources scheduled by the N network devices for the terminal device, the terminal device may use an intersection set of the initial time-frequency resources in the N pieces of initial scheduling information corresponding to the N network devices as the time-frequency resource for coordinated transmission; or the terminal device may process the N initial time-frequency resources by using a predefined algorithm, to determine the time-frequency resource for coordinated transmission. It should be understood that the foregoing manners of determining the time-frequency resource for coordinated transmission are merely examples rather than limitations.

When determining the MCS order for coordinated transmission, the terminal device may select a largest order in the N initial MCS orders in the N pieces of initial scheduling information as the MCS order for coordinated transmission, to increase signal power and suppress interference. Alternatively, the terminal device further increases a largest initial MCS order in the N initial MCS orders, and then determines the highest initial MCS order as the MCS order for coordinated transmission, to further increase signal power. It should be understood that the foregoing manners of determining the MCS order for coordinated transmission are merely examples rather than limitations.

When determining the transport layer quantity for coordinated transmission, the terminal device may use a largest transport layer quantity in the N initial transport layer quantities in the N pieces of initial scheduling information corresponding to the N network devices as the transport layer quantity for coordinated transmission, to enhance a capability of suppressing interference between data streams. Alternatively, the terminal device further increases a largest initial transport layer quantity in the N initial transport layer quantities, and then determines the largest initial transport layer quantity as the transport layer quantity for coordinated transmission, to further enhance a capability of suppressing interference between data streams. It should be understood that the foregoing manners of determining the transport layer quantity for coordinated transmission are merely examples rather than limitations.

It should be noted that a rule (for example, using the union set or the intersection set, or changing of some information in the N pieces of initial scheduling information listed above) used by the terminal device to determine the coordinated transmission scheduling information is not limited in this application. The rule may be predefined, for example, specified in a protocol. Alternatively, the rule may be determined by the terminal device. Alternatively, after the rule is agreed on by the N network devices through information exchange by using a non-ideal backhaul, the rule may be delivered by at least one of the N network devices to the terminal device by using higher layer signaling, for example, RRC signaling.

After determining the coordinated transmission scheduling information based on the N pieces of initial scheduling information, the terminal device may determine the first indication information based on the information about the N network devices corresponding to the N pieces of initial scheduling information.

For example, the information about the N network devices is identifiers of the N network devices, and correspondingly, the first indication information determined by the terminal device includes the identifiers of the N network devices.

Alternatively, the information about the N network devices is indexes (CORESETPOOLIndex) of N control resource set (control resource set, CORESET) pools corresponding to the N pieces of DCI sent by the N network devices.

It should be understood that the information about the N network devices is merely an example rather than a limitation, in other words, the information about the N network devices may alternatively be other information.

S230: The terminal device sends the coordinated transmission scheduling information and the first indication information.

Specifically, after determining the coordinated transmission scheduling information and the first indication information based on the N pieces of initial scheduling information, the terminal device sends the coordinated transmission scheduling information and the first indication information on an uplink time-frequency resource.

In an implementation, the terminal device sends the coordinated transmission scheduling information and the first indication information by using UCI.

Optionally, the terminal device sends the UCI on a pre-obtained uplink time-frequency resource, and the UCI includes the coordinated transmission scheduling information and the first indication information. Optionally, the pre-obtained uplink time-frequency resource may be a time-frequency resource of a PUCCH.

For example, the uplink time-frequency resource may be a time-frequency resource scheduled by the N network devices in a static scheduling (static scheduling) or semi-persistent scheduling (semi-persistent scheduling) manner. For example, the uplink time-frequency resource is a time-frequency resource indicated by higher layer signaling, for example, RRC signaling, sent by any one of the N network devices to the terminal device. Alternatively, the uplink time-frequency resource is defined in a protocol. It should be understood that the uplink time-frequency resource is a grant-free (grant-free) time-frequency resource, and the uplink time-frequency resource is an uplink resource shared by the N network devices. When the terminal device needs to send the UCI on the uplink time-frequency resource, the network device does not need to dynamically trigger the UCI by sending the DCI to the terminal device.

Alternatively, the uplink time-frequency resource may be periodically configured by the network devices participating in the coordinated transmission. To be specific, the N network devices indicate, by using an agreed-on periodicity, that the terminal device can send the UCI on the uplink time-frequency resource. For example, the agreed-on periodicity may be indicated by at least one of the N network devices to the terminal device by using higher layer signaling, for example, RRC signaling. For example, when the periodicity agreed on by the N network devices is 20 slots (slots), after receiving periodicity information, the terminal device may choose to send the UCI in a slot such as a 1^{st} slot, a 21^{st} slot, or a 41^{st} slot.

It should be understood that, when the UCI does not need to be sent, the uplink time-frequency resource may be used to perform data transmission in a PUSCH transmission phase. In other words, when the UCI is not sent, the uplink time-frequency resource may be reused as a time-frequency resource for uplink data transmission.

In another implementation, the coordinated transmission scheduling information and the first indication information that are sent by the terminal device are carried in a response message. For example, when the network device sends the initial scheduling information to the terminal device by using the configuration information, after receiving the initial scheduling information sent by the network device, the terminal device generates the coordinated transmission scheduling information and the first indication information based on the N pieces of initial scheduling information, and sends the coordinated transmission scheduling information and the first indication information to the network device by using the response message. For example, when the N pieces of initial scheduling information sent by the N network devices are sent to the terminal device by using higher layer signaling (for example, RRC signaling), MAC-CE signaling, or the like, the coordinated transmission scheduling information and the first indication information that are determined by the terminal device may be sent to each network device by using the response message for the RRC signaling, the MAC-CE signaling, or the like.

In still another possible implementation, the terminal device may send the coordinated transmission scheduling information and the first indication information to each network device by using a time-frequency resource of the PUSCH. It should be noted that the resource of the PUSCH may be scheduled by using a configured grant. After the N network devices activate an uplink grant for the terminal device once, when the terminal device needs to send the coordinated transmission scheduling information and the first indication information, the N network devices may receive, by using the resource of the PUSCH, the coordinated transmission scheduling information and the first indication information that are sent by the terminal device.

For example, Table 1 shows content included in the UCI.

**Table 1**

| |
|---|
| Frequency domain resource indication field |
| Time domain resource indication field |
| MCS domain |
| Transport layer quantity domain |
| Network device indication field (first indication information field) |
| New data indication field |
| Hybrid automatic repeat request (hybrid automatic repeat request, HARQ)-acknowledgment (acknowledgment, ACK) resource domain |

In Table 1, the frequency domain resource indication field indicates a set of frequency domain resources, such as RBs or RBGs, of data and/or signaling carried in the UCI. The time domain resource indication field indicates allocation of time domain resources of the data and/or the signaling carried in the UCI.

The MCS field is used to determine an index of an MCS order of the data and/or the signaling carried in the UCI.

The transport layer quantity field is used to determine a transport layer quantity of the data and/or the signaling carried in the UCI.

A transport block size (transport block size, TBS) of the data may be determined based on the frequency domain resource indication field, the time domain resource indication field, the MCS field, and the transport layer quantity field.

The network device indication field may also be referred to as the first indication information field, is used to carry the first indication information determined by the terminal device, and indicates information about a network device (for example, an identifier of the network device, or CORESETPOOLIndex corresponding to DCI sent by the network device) corresponding to initial scheduling information for generating the coordinated transmission scheduling information.

Optionally, the UCI further includes at least one of the following:
the new data indication field, indicating whether transmission data scheduled by using the coordinated transmission scheduling information is new-transmission data or retransmission data; and
the HARQ-ACK resource field, indicating a time-frequency resource for transmission of acknowledgment feedback information.

It should be understood that Table 1 is merely an example rather than a limitation. To be specific, when the UCI is used to carry the coordinated transmission scheduling information, this falls within the protection scope of this application.

S240: The terminal device performs data transmission with the N network devices.

Specifically, after the N network devices receive the coordinated transmission scheduling information and the first indication information that are sent by the terminal device, the N network devices perform data coordinated transmission with the terminal device.

When the N pieces of initial scheduling information are used to schedule the downlink data, the terminal device receives, on the time-frequency resource for coordinated transmission, same downlink data sent by the N network devices. When the N pieces of initial scheduling information sent by the N network devices are used to schedule the uplink data, the terminal device sends the uplink data on the time-frequency resource for coordinated transmission. Correspondingly, the N network devices receive the uplink data on the time-frequency resource for coordinated transmission.

In an implementation, when the coordinated transmission scheduling information and the first indication information are carried in the periodically sent UCI, the N network devices may obtain, on the uplink time-frequency resource in a periodic detection manner, the UCI that carries the coordinated transmission scheduling information and the first indication information. For example, when a periodicity in which the terminal device sends the UCI is 20 slots, the N network devices may detect, by using 20 slots as a periodicity, whether the UCI exists on the uplink time-frequency resource. After obtaining the UCI through detection, the N network devices determine, through parsing, that the UCI includes the first indication information and the coordinated transmission scheduling information.

It should be noted that for the terminal device, the terminal device determines the coordinated transmission scheduling information and the first indication information by using the successfully received N pieces of initial scheduling information, and notifies, by using the first indication information, the network device that the coordinated transmission scheduling information of the terminal device is generated based on initial scheduling information delivered by which network devices. It should be understood that in a scenario in which only the N network devices send the initial scheduling information (that is, the scenario shown in FIG. 2), the first indication information includes the information about all the network devices. In this scenario, each of the N network devices may determine, by using the first indication information, that the initial scheduling information sent by the network device has been successfully received by the terminal device.

In addition, it should be further noted that, regardless of whether the first indication information received by the network device includes device information of the network device, the network device may choose to or not to participate in the coordinated transmission. It should be understood that in the method 200 in this embodiment of this application, that all the N network devices participate in the coordinated transmission is an example.

It should be further understood that in this embodiment of this application, after the N network devices receive the coordinated transmission scheduling information from the terminal device, when the N network devices participating in the coordinated transmission perform data transmission with the terminal device, the coordinated transmission scheduling information determined by the terminal device is used. For example, in the CJT, the N network devices transmit, on the time-frequency resource that is for coordinated transmission and that is determined by the terminal device, same downlink data to the terminal device by using the MCS order for coordinated transmission and the transport layer quantity for coordinated transmission that are determined by the terminal device. In the CJR, the N network devices receive, on the time-frequency resource that is for coordinated transmission and that is determined by the terminal device, the uplink data from the terminal device by using the MCS order for coordinated transmission and the transport layer quantity for coordinated transmission that are determined by the terminal device.

In an implementation, after the N network devices receive the coordinated transmission scheduling information from the terminal device, the N network devices may wait for first time (or referred to as time T1) before performing data transmission with the terminal device. For example, after receiving the coordinated transmission scheduling information (which may be, for example, carried in the UCI) from the terminal device, the N network devices may trigger counters (where for example, the counter may be a timing countdown counter) in the network devices. A moment at which the coordinated transmission scheduling information is received is used as a trigger moment of the counter, and a value of the counter is zero after the first time. In this case, the N network devices send the downlink data to the terminal device, or the N network devices receive the uplink data sent by the terminal device.

Optionally, the first time may be preset. When the first time is a preset value, counters starting from the first time may be disposed in all the N network devices.

In addition, the first time may be alternatively determined through interaction between the N network devices. For example, the N network devices determine the first time in a negotiated manner through non-ideal backhaul interaction.

For example, in this embodiment of this application, after obtaining the UCI through detection in an uplink slot, the N network devices may send, to the terminal device in a downlink slot immediately after the UCI is detected, DCI indicating to schedule the PDSCH (used to send the downlink data) or the PUSCH (used to send the uplink data). In this case, the first time may be a time interval between obtaining the UCI by the network device through detection and sending the DCI for scheduling the PDSCH or the PUSCH.

It should be noted that each of the N pieces of DCI sent by the N network devices to the terminal device after an interval of the first time indicates that the terminal device performs downlink data transmission or uplink data transmission by using the coordinated transmission scheduling information. Therefore, each of the N pieces of DCI includes the coordinated transmission scheduling information carried in the UCI. It should be understood that each of the N pieces of DCI further includes other information for scheduling downlink data transmission or uplink data transmission, for example, redundancy version information and DCI format identification information.

The first time is set. This can ensure that the network devices participating in the coordinated transmission simultaneously send data to the terminal device at a same start time point (for example, a time point at which the countdown counter is 0), or simultaneously receive data from the terminal device at a same start time point (for example, a time point at which the countdown counter is 0), to improve communication reliability and stability, and further improve user experience.

Optionally, after S230, the method further includes the following step. S250: The N network devices determine the coordinated transmission scheduling information and the first indication information. For example, each network device determines, by parsing the UCI, that the UCI includes the coordinated transmission scheduling information and the first indication information. In other words, the N network devices determine that the coordinated transmission scheduling information and the first indication information that are sent by the terminal device are received.

Optionally, the method 200 may further include a process in which the N network devices obtain uplink channel state information or downlink channel state information. When the N network devices obtain the uplink channel state information, the uplink channel state information may be obtained by using a sounding reference signal (sounding reference signal, SRS) sent by the terminal device to the N network devices.

In a time division multiplexing system, because an uplink channel and a downlink channel have reciprocity, when the N network devices obtain the uplink channel state information, the terminal device first sends the SRS to the network devices, so that the N network devices can obtain the uplink channel state information. Then, the network device may estimate the downlink channel state information by measuring the uplink channel, to be specific, obtain corresponding downlink channel state information based on the reciprocity of the uplink channel and the downlink channel.

In another implementation, the terminal device may receive a channel state information-reference signal (channel state information-reference signal, CSI-RS) from the network device, to perform CSI measurement and feedback on the downlink channel. CSI may include but is not limited to a precoding matrix indicator (precoding matrix indicator, PMI), a rank indicator (rank indicator, RI), a channel quality indicator (channel quality indicator, CQI), a layer indicator (layer indicator, LI), and the like. This is not limited in this application. For example, the network device may determine, based on the CQI fed back by the terminal device, an MCS corresponding to channel quality, to perform coding and modulation processing on a to-be-sent signal. Alternatively, the network device may determine, based on the RI and the PMI that are fed back by the terminal device, a transport layer quantity and a precoding matrix that adapts to the transport layer quantity, to precode a to-be-sent signal.

According to the data scheduling method for coordinated transmission provided in this embodiment of this application, the terminal device processes the initial scheduling information of the network devices, to determine the coordinated transmission scheduling information, so that the network devices can implement coordinated transmission in a non-ideal backhaul by using the coordinated transmission scheduling information. When determining the coordinated transmission scheduling information, the terminal device can comprehensively consider a resource status and a channel condition of each network device. Therefore, according to the data scheduling method for coordinated transmission provided in this embodiment of this application, system transmission performance can be improved, thereby improving user experience.

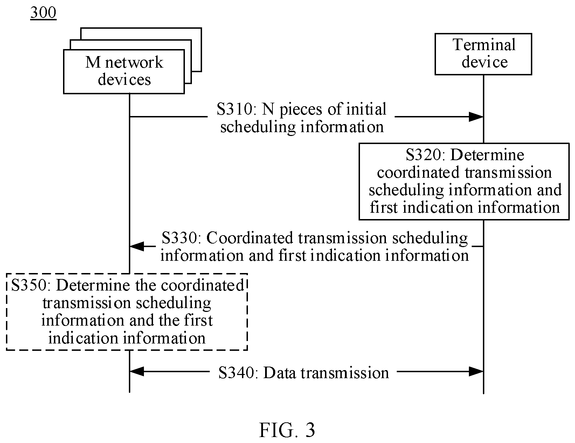

In some unreliable transmission scenarios, for example, in a communication system, some network devices in the network devices participating in the coordinated transmission do not send initial scheduling information to the terminal device due to service statuses of the network devices, some initial scheduling information received by the terminal device cannot be correctly demodulated, or even initial scheduling information sent by the network device is not received. An embodiment of this application provides a data scheduling method 300 for coordinated transmission, as shown in FIG. 3. FIG. 3 is a schematic flowchart of another data scheduling method 300 for coordinated transmission according to the embodiment of this application from a perspective of device interaction. The method 300 may include S310 to S340. The following describes in detail the steps in the method 300.

S310: A terminal device receives N pieces of initial scheduling information.

It should be understood that in a scenario shown in FIG. 3, a communication system includes M network devices (where M is an integer greater than N). That the terminal device receives the N pieces of initial scheduling information may include but is not limited to the following cases: (M-N) network devices in the M network devices do not send initial scheduling information to the terminal device due to service statuses of the (M-N) network devices (for example, the network devices need to preferentially schedule other user data), and only N network devices send the N pieces of initial scheduling information to the terminal device. Alternatively, all the M network devices send initial scheduling information to the terminal device, but the terminal device does not correctly demodulate (M-N) pieces of initial scheduling information, and correctly demodulates only the N pieces of initial scheduling information in M pieces of initial scheduling information. Alternatively, all the M network devices send initial scheduling information to the terminal device, but the terminal device does not receive (M-N) pieces of initial scheduling information, and receives only the N pieces of initial scheduling information in M pieces of initial scheduling information, that is, the (M-N) pieces of initial scheduling information fail to be sent. In other words, regardless of which scenario in the foregoing scenarios, the method corresponds to a case in which the terminal device correctly receives only the initial scheduling information corresponding to the N network devices. Correct reception may be understood as reception and successful demodulation. It should be noted that the M network devices are network devices participating in the coordinated transmission. Optionally, the M network devices participating in the coordinated transmission are determined based on channels between the network devices and the terminal device, determined based on positions of the network devices, or determined according to a rule preset in a standard. Determining of the M network devices participating in the coordinated transmission is merely an example rather than a limitation. It should be understood that for CJT coordinated transmission, the M network devices participating in the coordinated transmission obtain and store data that needs to be sent to the terminal device.

For example, when the communication system includes three network devices (a first network device, a second network device, and a third network device), the three network devices participate in the coordinated transmission (that is, M is 3). In the scenario shown in FIG. 3, the first network device, the second network device, and the third network device may respectively send initial scheduling information #1, initial scheduling information #2, and initial scheduling information #3 to the terminal device. Due to unreliable transmission, the terminal device receives only two pieces of initial scheduling information in the initial scheduling information #1, the initial scheduling information #2, and the initial scheduling information #3 (that is, N is 2). It should be understood that the two pieces of initial scheduling information received by the terminal device device are any two of the three pieces of scheduling information. The initial scheduling information #1 is corresponding initial scheduling information sent by the first network device to the terminal device, and the initial scheduling information #1 includes an initial time-frequency resource, an initial MCS order, and an initial transport layer quantity that are configured by the first network device for the terminal device. The initial scheduling information #2 is corresponding initial scheduling information sent by the second network device to the terminal device, and the initial scheduling information #2 includes an initial time-frequency resource, an initial MCS order, and an initial transport layer quantity that are configured by the second network device for the terminal device. The initial scheduling information #3 is corresponding initial scheduling information sent by the third network device to the terminal device, and the initial scheduling information #3 includes an initial time-frequency resource, an initial MCS order, and an initial transport layer quantity that are configured by the third network device for the terminal device.

It should be understood that the M network devices are M network devices including the N network devices, in other words, the N network devices belong to the M network devices. The M network devices are network devices participating in the coordinated transmission. For CJT, the M network devices store same downlink data.

In addition, values of M and N are merely examples rather than limitations. In this embodiment of this application, N is an integer greater than 1, and M is an integer greater than N.

It should be further understood that for related descriptions of receiving the N pieces of initial scheduling information by the terminal device, refer to S210. Details are not described herein again.

S320: The terminal device determines coordinated transmission scheduling information and first indication information. For related descriptions of this step, refer to S220. Details are not described herein again.

S330: The terminal device sends the coordinated transmission scheduling information and the first indication information. For related descriptions of this step, refer to S230. Details are not described herein again.

S340: The terminal device performs data transmission with the M network devices.

In an implementation, if the (M-N) network devices in the M network devices do not send the initial scheduling information to the terminal device, because the coordinated transmission scheduling information sent by the terminal device is sent on an uplink resource predefined by the M network devices, all the M network devices can receive the coordinated transmission scheduling information. In other words, although the (M-N) network devices do not send the initial scheduling information to the terminal device, the (M-N) network devices may still receive the coordinated transmission scheduling information sent by the terminal device. In this case, the (M-N) network devices may choose to perform coordinated transmission with the terminal device. This process is the same as a process of data transmission between the N network devices and the terminal device, that is, the same as the foregoing S240. Details are not described herein again.

If the (M-N) network devices do not send the initial scheduling information to the terminal device, when the (M-N) network devices receive the coordinated transmission scheduling information sent by the terminal device, the (M-N) network devices may choose not to participate in the coordinated transmission with the terminal device. In CJR, the (M-N) network devices may choose not to receive UCI or not to receive uplink data. In the CJT, because the (M-N) network devices store same to-be-sent downlink data, after receiving the coordinated transmission scheduling information, the (M-N) network devices may determine a TBS of the data based on a time-frequency resource for coordinated transmission, an MCS order for coordinated transmission, and a transport layer quantity for coordinated transmission, and delete the data corresponding to the TBS, to avoid a case in which data in a buffer is incorrectly sent to the terminal device during a next time of coordinated transmission.

It should be understood that a case in which the (M-N) network devices do not send the initial scheduling information to the terminal device may be, for example, that although the (M-N) network devices are coordinated transmission devices of the terminal device, the (M-N) network devices may not send the initial scheduling information to the terminal device because the network devices may be serving another user with a higher priority during scheduling. Alternatively, when sending the initial scheduling information, the (M-N) network devices do not send the initial scheduling information to the terminal device because channel conditions between the (M-N) network devices and the terminal device are poor.

In another implementation, if all the M network devices send the initial scheduling information to the terminal device, when the terminal device correctly demodulates only the N pieces of initial scheduling information, in other words, the (M-N) pieces of initial scheduling information fail to be demodulated, the first indication information determined by the terminal device includes information about the N network devices. In other words, when receiving the first indication information sent by the terminal device, the network devices corresponding to the (M-N) pieces of initial scheduling information that are not correctly demodulated do not obtain information about the network devices in the first indication information through detection. In this case, the (M-N) network device may choose to perform coordinated transmission with the terminal device, or determine a TBS of data based on a time-frequency resource for coordinated transmission, an MCS order for coordinated transmission, and a transport layer quantity for coordinated transmission, and delete the data corresponding to the TBS.

It should be noted that, the embodiment shown in FIG. 2 is described for the scenario in which all the N network devices participate in the coordinated transmission. To be specific, all the N network devices send the initial scheduling information to the terminal device. Correspondingly, the terminal device successfully receives the N pieces of initial scheduling information, generates the coordinated transmission scheduling information and the first indication information based on the N pieces of initial scheduling information, and sends the coordinated transmission scheduling information and the first indication information by using the pre-obtained uplink resource. After receiving the coordinated transmission scheduling information and the first indication information, all the N network devices determine to participate in the coordinated transmission. The method shown in FIG. 3 is proposed for the foregoing several unreliable transmission scenarios. In other words, when the M network devices perform coordinated transmission with the terminal device in a network, the terminal device may receive only the N pieces of initial scheduling information (where N is an integer less than M) due to some reasons (a reception failure, a demodulation failure, and the like), and determine unified coordinated transmission scheduling information based on the N pieces of initial scheduling information corresponding to the N network devices. In other words, in the scenario shown in FIG. 3, even if all the network devices in the communication system send the initial scheduling information to the terminal device, the terminal device receives only initial scheduling information delivered by a part (N) of network devices. In this scenario, there may be a case in which first indication information received by a part of the network devices does not include device information of the part of the network devices. In this case, the part of the network devices may choose to or not to participate in the coordinated transmission.

It should be understood that before the M network devices perform data transmission with the terminal device, S350 is further included. For this process, refer to S250. Details are not described herein again.

Based on the foregoing solution, according to the data scheduling method for coordinated transmission provided in this embodiment of this application, it can be ensured that data of the network devices is unified in the unreliable transmission scenario, thereby improving stability of a network system.

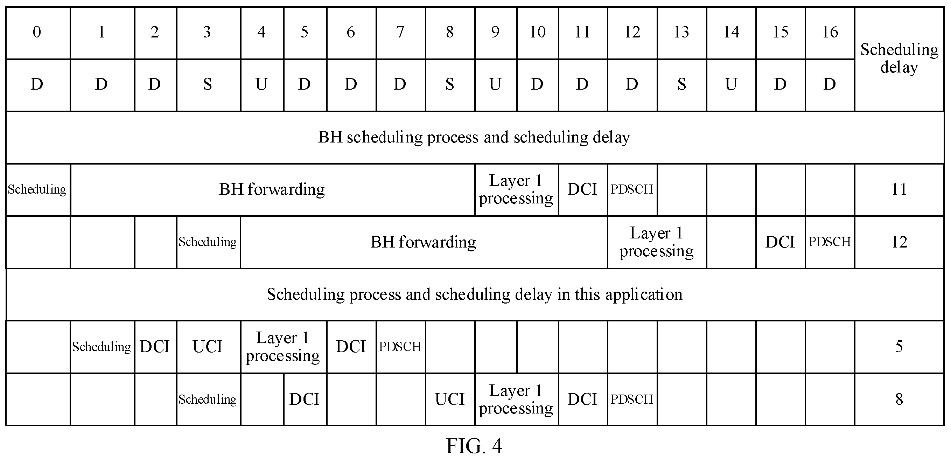

FIG. 4 is a diagram of an interaction delay comparison result in a data scheduling method for coordinated transmission and a scheduling manner of coordinated transmission based on BH interaction according to an embodiment of this application. In FIG. 4, descriptions are provided by using an example in which in a TDD communication system, a downlink-uplink time ratio of 4:1 configured by the system, a subcarrier spacing of 30 kHz, and each transmission time interval (transmission time interval, TTI) of 0.5 ms are used.

Specifically, in FIG. 4, for the scheduling manner of the coordinated transmission based on the BH interaction, if a network device starts to perform scheduling in a TTI 0, the network device exchanges a scheduling result with another network device in the coordinated transmission by using a BH. Considering that a typical delay of the BH is 4 ms, the BH interaction is completed after eight TTIs. In this case, a network device that performs coordinated transmission with a terminal device starts to perform layer 1 (L1) processing in a TTI 9 (where this process includes an operation such as weight design, for details, refer to current related technical descriptions, and details are not described herein), sends, to the terminal device in a TTI 11 after two TTIs, DCI for scheduling a PDSCH, and then sends the PDSCH in a TTI 12. This process takes 11 TTIs from a time point at which the scheduling is completed to a time point at which the PDSCH is sent, that is, a scheduling delay is 11 TTIs. If a network device starts to perform scheduling in a TTI 3, L1 processing is completed in a TTI 13. Then, the network device waits for one uplink slot (which cannot be used to send DCI), and sends a PDSCH after the DCI is sent in a downlink slot (namely, a TTI 15). In this case, a scheduling delay is 12 TTIs. It should be understood that FIG. 4 shows only one time of BH interaction. In an actual system, each network device in the coordinated transmission may need to perform a plurality of times of the BH interaction to coordinate scheduling information. Consequently, an actual scheduling delay is higher.

When scheduling is performed in the scheduling manner in this application, if the network device starts to perform scheduling in a TTI 1, the network device sends, in a TTI 2, DCI that carries initial scheduling information. The terminal device generates coordinated transmission scheduling information and first indication information after processing, and sends, on an uplink time-frequency resource in the TTI 3, UCI that carries the coordinated transmission scheduling information and the first indication information. After obtaining the UCI through detection, the network device performs L1 processing in two TTIs, and sends, in a TTI 6 and a TTI 7, the DCI for scheduling the PDSCH and the PDSCH respectively. In this case, a scheduling delay is five TTIs. If the network device starts to perform scheduling in the TTI 3, because a TTI 4 belongs to the uplink slot, the network device does not deliver, until a TTI 5, the DCI that carries the initial scheduling information. After the terminal device generates the coordinated transmission scheduling information and the first indication information, because the TTI 6 and the TTI 7 are downlink slots, the terminal device sends, in a TTI 8, the UCI that carries the coordinated transmission scheduling information and the first indication information, performs L1 processing in two TTIs, and sends the PDSCH in the TTI 12 after DCI is sent in a downlink slot (namely, the TTI 11). In this case, a scheduling delay is eight TTIs.

It should be understood that in an FDD communication system, because there is no concept of the downlink-uplink time ratio, when the data scheduling method for coordinated transmission in this application is used, without waiting to receive, on a downlink time-frequency resource, the DCI that carries the initial scheduling information (that is, a delay of the TTI 4 is saved), the terminal device receives, after scheduling starts to be performed, DCI that is sent by the network device and that is used for initial scheduling. Then, after generating the coordinated transmission scheduling information based on the DCI for the initial scheduling, without waiting to send the UCI on the uplink time-frequency resource (that is, delays of the TTI 6 and the TTI 7 are saved), the terminal device may send the UCI by using the uplink time-frequency resource. In conclusion, in comparison with the TDD system, in the FDD communication system, according to the scheduling data method for coordinated transmission provided in this application, an interaction delay is further reduced.

In conclusion, it can be learned from FIG. 4 that the interaction delay can be reduced by using the solutions provided in this application.

It should be understood that FIG. 4 is described for the comparison result for CJT in the coordinated transmission. In addition, for the FDD system, the terminal device may send the UCI without waiting for an uplink resource when sending the UCI. Therefore, in the FDD system, the interaction delay is further reduced.

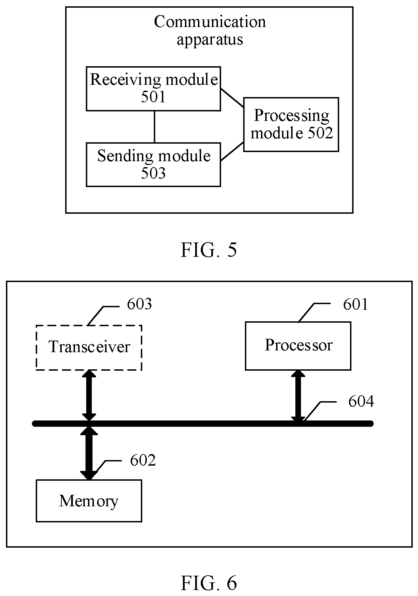

FIG. 5 is a block diagram of a communication apparatus 500 for data scheduling in coordinated transmission according to an embodiment of this application. The apparatus 500 includes a receiving module 501. The receiving module 501 may be configured to implement a corresponding receiving function. The receiving module 501 may also be referred to as a receiving unit.

The apparatus 500 further includes a processing module 502. The processing module 502 may be configured to implement a corresponding processing function.

The apparatus 500 further includes a sending module 503. The sending module 503 may be configured to implement a corresponding sending function. The sending module 503 may also be referred to as a sending unit.

Optionally, the apparatus 500 further includes a storage unit. The storage unit may be configured to store instructions and/or data. The processing module 502 may read the instructions and/or the data in the storage unit, so that the apparatus implements actions of the related apparatus in the foregoing method embodiments.

The apparatus 500 may be configured to perform an action performed by the terminal device or the network device in the foregoing method embodiments. In this case, the apparatus 500 may be a component of the terminal device or the network device. The receiving module 501 is configured to perform a receiving-related operation of the terminal device or the network device in the foregoing method embodiments. The processing module 502 is configured to perform a processing-related operation of the terminal device or the network device in the foregoing method embodiments. The sending module 503 is configured to perform a sending-related operation of the terminal device or the network device in the foregoing method embodiments.

In a design, the apparatus 500 is configured to perform an action performed by any device in the foregoing method embodiments (the method 200 and the method 300). In an embodiment, the communication apparatus for data scheduling in coordinated transmission may be configured to perform an operation of the terminal device in FIG. 2 or FIG. 3. For example,
the receiving module 501 is configured to receive N pieces of initial scheduling information from N network devices. Each of the N pieces of initial scheduling information includes an initial time-frequency resource, an initial modulation and coding scheme MCS order, and an initial transport layer quantity, one of the N pieces of initial scheduling information is from one of the N network devices, and the N network devices are in one-to-one correspondence with the N pieces of initial scheduling information. The receiving module 501 is further configured to: when the N pieces of initial scheduling information are used to schedule downlink data, receive, on a time-frequency resource for coordinated transmission, same downlink data sent by M network devices.

N is an integer greater than 1, M is an integer greater than or equal to N, and the M network devices include the N network devices.

Optionally, the N pieces of initial scheduling information may be carried in N pieces of DCI.

The processing module 502 is configured to determine coordinated transmission scheduling information and first indication information based on the N pieces of initial scheduling information. The coordinated transmission scheduling information includes the time-frequency resource for coordinated transmission, an MCS order for coordinated transmission, and a transport layer quantity for coordinated transmission. The first indication information indicates information about the N network devices.

Optionally, the first indication information includes indexes of N control resource set pools corresponding to the N pieces of DCI of the N network devices.

Optionally, the first indication information includes identifiers or identification information of the N network devices.

The sending module 503 is configured to send the coordinated transmission scheduling information and the first indication information, and is further configured to: when the N pieces of initial scheduling information are used to schedule uplink data, send the uplink data on the time-frequency resource for coordinated transmission.

Optionally, the coordinated transmission scheduling information may be carried in predefined UCI. N is an integer greater than 1, and M is an integer greater than or equal to N.

It should be understood that a specific process in which the modules perform the foregoing corresponding steps has been described in detail in the foregoing method embodiments. For brevity, details are not described herein again.

In addition, the receiving module 501, the processing module 502, and the sending module 503 in the communication apparatus 500 for data scheduling in coordinated transmission may further implement other operations or functions of the terminal device in the foregoing methods. Details are not described herein again.

Optionally, the communication apparatus 500 for data scheduling in coordinated transmission may be a device including a terminal device. Alternatively, the data scheduling apparatus 500 for coordinated transmission may be a component configured in a terminal device, for example, a chip in the terminal device. In this case, the receiving module 501 and the sending module 503 may be an interface circuit, a pin, or the like. Specifically, the interface circuit may include an input circuit and an output circuit. The receiving module 501 may include the input circuit, the sending module 503 may include the output circuit, and the processing module 502 may include a processing circuit.

In another embodiment, the communication apparatus for data scheduling in coordinated transmission may be configured to perform an operation of the network device in FIG. 2 or FIG. 3. For example,
the receiving module 501 is configured to receive coordinated transmission scheduling information and first indication information from a terminal device, where the coordinated transmission scheduling information includes a time-frequency resource for a coordinated transmission, an MCS order for coordinated transmission, and a transport layer quantity for coordinated transmission, the coordinated transmission scheduling information is generated based on N pieces of initial scheduling information, one of the N pieces of initial scheduling information is from the network device, the N pieces of initial scheduling information are in one-to-one correspondence with N network devices, and the first indication information indicates information about the N network devices. The receiving module 501 is further configured to: when the initial scheduling information is used to schedule uplink data, receive, on the time-frequency resource for coordinated transmission, same uplink data sent by the terminal device.

Optionally, the N pieces of initial scheduling information may be carried in N pieces of DCI, and N is an integer greater than 1. The network device is one of M network devices, M is an integer greater than or equal to N, and the M network devices include the N network devices.

Optionally, the first indication information includes indexes of N control resource set pools corresponding to the N pieces of DCI of the N network devices.

Optionally, the first indication information includes identifiers or identification information of the N network devices.

The sending module 503 is configured to send the initial scheduling information to the terminal device, where the initial scheduling information includes an initial time-frequency resource, an initial modulation and coding scheme MCS order, and an initial transport layer quantity. The sending module 503 is further configured to: when the initial scheduling information is used to schedule downlink data, send same downlink data to the terminal device on the time-frequency resource for coordinated transmission.

Optionally, the coordinated transmission scheduling information may be carried in predefined UCI.

In addition, the receiving module 501, the processing module 502, and the sending module 503 in the communication apparatus 500 for data scheduling in coordinated transmission may further implement other operations or functions of the network device in the foregoing methods. Details are not described herein again.

Optionally, the communication apparatus 500 for data scheduling in coordinated transmission may be a device including a network device. Alternatively, the data scheduling apparatus 500 for coordinated transmission may be a component configured in a network device, for example, a chip in the network device. In this case, the receiving module 501 and the sending module 503 may be an interface circuit, a pin, or the like. Specifically, the interface circuit may include an input circuit and an output circuit. The receiving module 501 may include the input circuit, the sending module 503 may include the output circuit, and the processing module 502 may include a processing circuit.

It should be understood that a specific process in which the modules perform the foregoing corresponding steps has been described in detail in the foregoing method embodiments. For brevity, details are not described herein again.

FIG. 6 is a diagram of a structure of another communication apparatus for data scheduling in coordinated transmission according to an embodiment of this application. The communication apparatus 600 for data scheduling in coordinated transmission includes a processor 601. As shown in FIG. 6, the communication apparatus for data scheduling in coordinated transmission may further include at least one memory 602, configured to store a computer program or instructions and/or data. The memory 602 is coupled to the processor 601. The processor 601 is configured to execute the computer program or the instructions and/or the data stored in the memory 602, so that the methods (the method 200 and the method 300) in the foregoing method embodiments are performed. The coupling in this embodiment of this application may be an indirect coupling or a communication connection between apparatuses, units, or modules in an electrical form, a mechanical form, or another form, and is used for information exchange between the apparatuses, the units, or the modules. The processor 601 may collaboratively operate with the memory 602. At least one of the at least one memory 602 may be included in the processor 601.

Optionally, the communication apparatus 600 for data scheduling in coordinated transmission includes one or more processors 601.

Optionally, the memory 602 and the processor 601 may be integrated together, or separately disposed.

The communication apparatus 600 for data scheduling in coordinated transmission may further include a transceiver 603, configured to perform data scheduling of the coordinated transmission with another device by using a transmission medium, so that the apparatus and the another device can perform data scheduling of the coordinated transmission. Optionally, the transceiver 603 may be an interface, a bus, a circuit, or an apparatus that can implement a transceiver function.

Optionally, a component that is in the transceiver 603 and that is configured to implement a receiving function may be considered as a receiving module, and a component that is in the transceiver 603 and that is configured to implement a sending function may be considered as a sending module. In other words, the transceiver 603 includes a receiver and a transmitter.

A specific connection medium between the processor 601, the memory 602, and the transceiver 603 is not limited in this embodiment of this application. In this embodiment of this application, in FIG. 6, the processor 601, the memory 602, and the transceiver 603 are connected through a bus 604. The bus is represented by a bold line in FIG. 6. A manner of connection between other components is merely used for illustrative description. This is not limited thereto. The bus may be classified into an address bus, a data bus, a control bus, and the like.

It should be understood that for ease of representation, only one bold line represents the bus in FIG. 6, but this does not indicate that there is only one bus or only one type of bus.

Optionally, as shown in FIG. 6, the communication apparatus 600 for data scheduling in coordinated transmission may further include the transceiver 603 and/or a communication interface. The transceiver 603 and/or the communication interface are/is configured to receive and/or send a signal. For example, the processor 601 is configured to control the transceiver 603 and/or the communication interface to receive and/or send data.

The transceiver may also be sometimes referred to as a transceiver machine, a transceiver module, a transceiver circuit, or the like. The receiver may also be sometimes referred to as a receiver machine, a receiving module, a receiving circuit, or the like. The transmitter may also be sometimes referred to as a transmitter machine, a transmitter, a transmitting module, a transmitting circuit, or the like.

For example, in an embodiment, the processor 601 is configured to perform another operation or function of a terminal device. The transceiver 603 is configured to implement data scheduling of coordinated transmission between the communication apparatus for data scheduling in coordinated transmission and a network device.

In another embodiment, the processor 601 is configured to perform another operation or function of a network device. The transceiver 603 is configured to implement data scheduling of coordinated transmission between the communication apparatus for data scheduling in coordinated transmission and a terminal device.

One or more of the foregoing modules or units may be implemented by using software, hardware, or a combination thereof. When any one of the foregoing modules or units is implemented by using the software, the software exists in a form of computer program instructions, and is stored in a memory. A processor may be configured to execute the program instructions and implement the foregoing method procedure. The processor may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores used to execute software instructions to perform an operation or processing. The processor may be built in a SoC (system on a chip) or an application specific integrated circuit (application specific integrated circuit, ASIC), or may be an independent semiconductor chip. In addition to the cores used to execute the software instructions to perform the operation or processing, the processor may further include a necessary hardware accelerator, such as a field programmable gate array (field programmable gate array, FPGA), a PLD (programmable logic device), or a logic circuit implementing a dedicated logical operation.

When the foregoing modules or units are implemented by using the hardware, the hardware may be any one or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedure.

When the foregoing modules or units are implemented by using the software, all or a part of the foregoing modules or units may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

An embodiment of this application provides a communication apparatus 700 for data scheduling in coordinated transmission. The apparatus 700 may be a network device, or may be a chip. The apparatus 700 may be configured to perform operations performed by the network device in the foregoing method embodiments (the method 200 and the method 300).

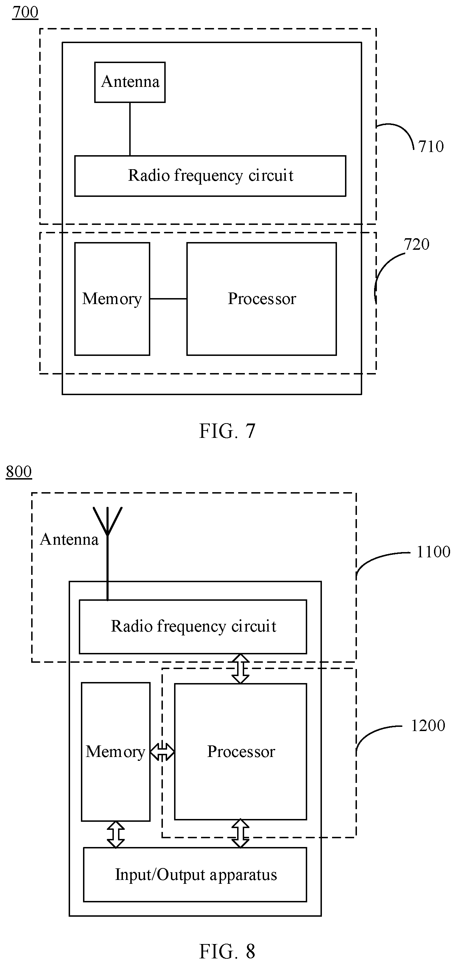

When the communication apparatus 700 for data scheduling in coordinated transmission is the network device, FIG. 7 is a diagram of a simplified structure of the network device. The network device includes a part 710 and a part 720. The part 710 includes an antenna and a radio frequency circuit. The antenna is mainly configured to receive and send a radio frequency signal, and the radio frequency circuit is mainly configured to perform conversion between the radio frequency signal and a baseband signal. The part 720 includes a memory and a processor, and is mainly configured to: perform baseband processing, control the network device, and the like. The part 710 may be usually referred to as a transceiver unit, a transceiver machine, a transceiver circuit, a transceiver, or the like. The part 720 is usually a control center of the network device, may be usually referred to as a processing unit, and is configured to control the network device to perform processing operations on the network device side in the foregoing method embodiments.

Optionally, a component that is in the part 710 and that is configured to implement a receiving function may be considered as a receiving unit, and a component configured to implement a sending function may be considered as a sending unit. In other words, the part 710 includes the receiving unit and the sending unit. The receiving unit may also be referred to as a receiver machine, a receiver, a receiving circuit, or the like. The sending unit may be referred to as a transmitter machine, a transmitter, a transmitting circuit, or the like.

When needing to send data, after performing baseband processing on the to-be-sent data, the processor outputs a baseband signal to the radio frequency circuit. The radio frequency circuit performs radio frequency processing on the baseband signal and then sends the radio frequency signal to the outside in a form of an electromagnetic wave through the antenna. When data is sent to the network device, the radio frequency circuit receives a radio frequency signal through the antenna, converts the radio frequency signal into a baseband signal, and outputs the baseband signal to the processor. The processor converts the baseband signal into data, and processes the data.

The part 720 may include one or more boards, and each board may include one or more processors and one or more memories. For ease of description, only one memory and one processor are shown in FIG. 7. The processor is configured to: read and execute a program in the memory to implement a baseband processing function and control the network device. If there are a plurality of boards, the boards may be interconnected with each other, to enhance a processing capability. In an optional implementation, the plurality of boards may share one or more processors, or the plurality of boards share one or more memories.

It should be understood that FIG. 7 is merely an example rather than a limitation, and the network device including the transceiver unit and the processing unit may not depend on the structure shown in FIG. 7.

When the communication apparatus 700 for data scheduling in coordinated transmission is the chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides another communication apparatus 800 for data scheduling in coordinated transmission. The apparatus 800 may be a terminal device, or may be a chip. The apparatus 800 may be configured to perform operations performed by the terminal device in the foregoing method embodiments (the method 200 and the method 300).

When the communication apparatus 800 for data scheduling in coordinated transmission is the terminal device, FIG. 8 is a diagram of a simplified structure of the terminal device. As shown in FIG. 8, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to: receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit. The radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 8 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 8, the terminal device includes a transceiver unit 1100 and a processing unit 1200. The transceiver unit 1100 may also be referred to as a transceiver, a transceiver machine, a transceiver apparatus, a transceiver circuit, or the like. The processing unit 1200 may also be referred to as a processor, a processing board, a processing module, a processing apparatus, or the like.

Optionally, a component that is in the transceiver unit 1100 and that is configured to implement a receiving function may be considered as a receiving unit, and a component that is in the transceiver unit 1100 and that is configured to implement a sending function may be considered as a sending unit. In other words, the transceiver unit 1100 includes the receiving unit and the sending unit. The receiving unit may also be referred to as a receiver machine, a receiver, a receiving apparatus, a receiving circuit, or the like. The sending unit may also be referred to as a transmitter machine, a transmitter, a transmitting apparatus, a transmitting circuit, or the like.

It should be understood that FIG. 8 is merely an example rather than a limitation, and the terminal device including the transceiver unit and the processing unit may not depend on the structure shown in FIG. 8.

When the communication apparatus 800 for data scheduling incoordinated transmission is the chip, the chip includes a transceiver unit and a processing unit. The transceiver unit may be an input/output circuit or a communication interface. The processing unit may be a processor, a microprocessor, or an integrated circuit integrated on the chip.

According to the methods provided in embodiments of this application, this application further provides a computer program product. The computer program product includes computer program code. When the computer program code is run on a computer, the computer is enabled to perform the method of the terminal device in the foregoing method embodiments.

According to the methods provided in embodiments of this application, this application further provides a computer program product. The computer program product includes computer program code. When the computer program code is run on a computer, the computer is enabled to perform the method of the network device in the foregoing method embodiments.

According to the methods provided in embodiments of this application, this application further provides a computer-readable medium. The computer-readable medium stores program code. When the program code is run on a computer, the computer is enabled to perform the method of the terminal device in the foregoing method embodiments.

According to the methods provided in embodiments of this application, this application further provides a computer-readable medium. The computer-readable medium stores program code. When the program code is run on a computer, the computer is enabled to perform the method of the network device in the foregoing method embodiments.

An embodiment of this application further provides a processing apparatus, including a processor and an interface. The processor is configured to perform the data scheduling method for coordinated transmission in any one of the foregoing method embodiments.

An embodiment of this application further provides a data scheduling system for coordinated transmission. The system includes a plurality of network devices and one terminal device in the foregoing embodiments.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that in combination with illustrative logical blocks (illustrative logical blocks) described in embodiments disclosed in this specification and steps (steps) may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

A person of ordinary skill in the art may be aware that in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a specific operating process of the foregoing system, apparatus, and unit, refer to a corresponding process in the foregoing method embodiments. Details are not described herein again.

It should be understood that "at least one" in embodiments of this application means one or more, and "a plurality of" means two or more than two. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, and c may indicate a, b, c, a and b, a and c, b and c, or a, b, and c. Each of a, b, and c may be singular or plural.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data scheduling method for coordinated transmission, comprising:
receiving, by a terminal device, N pieces of initial scheduling information from N network devices, wherein one of the N pieces of initial scheduling information is from one of the N network devices, the initial scheduling information comprises an initial time-frequency resource, an initial modulation and coding scheme MCS order, and an initial transport layer quantity, and the N network devices are in one-to-one correspondence with the N pieces of initial scheduling information;
sending, by the terminal device, coordinated transmission scheduling information and first indication information, wherein the coordinated transmission scheduling information comprises a time-frequency resource for coordinated transmission, an MCS order for coordinated transmission, and a transport layer quantity for coordinated transmission, the coordinated transmission scheduling information is determined based on the N pieces of initial scheduling information, and the first indication information indicates information about the N network devices; and
performing, by the terminal device, data transmission with M network devices on the time-frequency resource for coordinated transmission, wherein
N is an integer greater than 1, M is an integer greater than or equal to N, and the M network devices comprise the N network devices.

2. The method according to claim 1, wherein the receiving, by a terminal device, N pieces of initial scheduling information from N network devices comprises:
receiving, by the terminal device, N pieces of downlink control information DCI from the N network devices, wherein one of the N pieces of DCI is from one of the N network devices, and the DCI comprises the initial scheduling information.

3. The method according to claim 2, wherein the DCI further comprises second indication information, and the second indication information indicates that the DCI comprises the initial scheduling information.

4. The method according to claim 3, wherein the DCI further comprises third indication information, and the third indication information indicates that the initial scheduling information is initial scheduling information of coherent joint transmission CJT or initial scheduling information of coherent joint reception CJR.

5. The method according to any one of claims 2 to 4, wherein that the first indication information indicates information about the N network devices comprises:
the first indication information indicates indexes of N control resource set pools corresponding to the N pieces of DCI of the N network devices.

6. The method according to any one of claims 1 to 5, wherein the sending, by the terminal device, coordinated transmission scheduling information and first indication information comprises:
sending, by the terminal device, uplink control information UCI, wherein the UCI comprises the coordinated transmission scheduling information and the first indication information.

7. The method according to claim 6, wherein
the UCI is carried on an uplink time-frequency resource, and the uplink time-frequency resource is a time-frequency resource scheduled in a static or semi-persistent manner.

8. The method according to any one of claims 1 to 7, wherein that the coordinated transmission scheduling information is determined based on the N pieces of initial scheduling information comprises:
the time-frequency resource for coordinated transmission in the coordinated transmission scheduling information is determined based on an intersection set or a union set of N initial time-frequency resources in the N pieces of initial scheduling information;
the MCS order for coordinated transmission in the coordinated transmission scheduling information is a largest value in N initial MCS orders in the N pieces of initial scheduling information; and
the transport layer quantity for coordinated transmission in the coordinated transmission scheduling information is a largest value in N initial transport layer quantities in the N pieces of initial scheduling information.

9. The method according to any one of claims 1 to 8, wherein the performing, by the terminal device, data transmission with M network devices on the time-frequency resource for coordinated transmission comprises:
when the N pieces of initial scheduling information are used for CJT, receiving, by the terminal device on the time-frequency resource for coordinated transmission, same downlink data sent by the M network devices; or
when the N pieces of initial scheduling information are used for CJR, sending, by the terminal device, uplink data on the time-frequency resource for coordinated transmission.

10. A data scheduling method for coordinated transmission, comprising:
sending, by a network device, initial scheduling information to a terminal device, wherein the initial scheduling information comprises an initial time-frequency resource, an initial modulation and coding scheme MCS order, and an initial transport layer quantity;
receiving, by the network device, coordinated transmission scheduling information and first indication information from the terminal device, wherein the coordinated transmission scheduling information comprises a time-frequency resource for coordinated transmission, an MCS order for coordinated transmission, and a transport layer quantity for coordinated transmission, the coordinated transmission scheduling information is determined based on N pieces of initial scheduling information, one of the N pieces of initial scheduling information is from one of N network devices, the N pieces of initial scheduling information are in one-to-one correspondence with the N network devices, and the first indication information indicates information about the N network devices; and
performing, by the network device, data transmission with the terminal device on the time-frequency resource for coordinated transmission, wherein
N is an integer greater than 1, the network device is one of M network devices, M is an integer greater than or equal to N, and the M network devices comprise the N network devices.

11. The method according to claim 10, wherein the sending, by a network device, initial scheduling information to a terminal device comprises:
sending, by the network device, downlink control information DCI to the terminal device, wherein the DCI comprises the initial scheduling information.

12. The method according to claim 11, wherein
the DCI further comprises second indication information, and the second indication information indicates that the DCI comprises the initial scheduling information.

13. The method according to claim 12, wherein the DCI further comprises third indication information, and the third indication information indicates that the initial scheduling information is scheduling information of coherent joint transmission CJT or scheduling information of coherent joint reception CJR.

14. The method according to any one of claims 11 to 13, wherein that the first indication information indicates information about the N network devices comprises:
the first indication information indicates indexes of N control resource set pools corresponding to N pieces of DCI of the N network devices.

15. The method according to any one of claims 10 to 14, wherein the receiving, by the network device, coordinated transmission scheduling information and first indication information from the terminal device comprises:
receiving, by the network device, uplink control information UCI from the terminal device, wherein the UCI comprises the coordinated transmission scheduling information and the first indication information.

16. The method according to claim 15, wherein
the UCI is carried on an uplink time-frequency resource, and the uplink time-frequency resource is a time-frequency resource scheduled by the network device for the terminal device in a static or semi-persistent manner.

17. The method according to any one of claims 10 to 16, wherein that the coordinated transmission scheduling information is determined based on N pieces of initial scheduling information comprises:
the time-frequency resource for coordinated transmission in the coordinated transmission scheduling information is determined based on an intersection set or a union set of N initial time-frequency resources in the N pieces of initial scheduling information;
the MCS order for coordinated transmission in the coordinated transmission scheduling information is a largest value in N initial MCS orders in the N pieces of initial scheduling information; and
the transport layer quantity for coordinated transmission in the coordinated transmission scheduling information is a largest value in N initial transport layer quantities in the N pieces of initial scheduling information.

18. The method according to any one of claims 10 to 17, wherein the performing, by the network device, data transmission with the terminal device on the time-frequency resource for coordinated transmission comprises:
when the initial scheduling information is used for CJT, sending, by the network device, downlink data to the terminal device on the time-frequency resource for coordinated transmission; or
when the initial scheduling information is used for CJR, receiving, by the network device, uplink data from the terminal device on the time-frequency resource for coordinated transmission.

19. A communication apparatus for data scheduling in coordinated transmission, comprising a receiving module and a sending module, wherein
the receiving module is configured to receive N pieces of initial scheduling information from N network devices, wherein one of the N pieces of initial scheduling information is from one of the N network devices, the initial scheduling information comprises an initial time-frequency resource, an initial modulation and coding scheme MCS order, and an initial transport layer quantity, and the N network devices are in one-to-one correspondence with the N pieces of initial scheduling information;
the sending module is configured to send coordinated transmission scheduling information and first indication information, wherein the coordinated transmission scheduling information comprises a time-frequency resource for coordinated transmission, an MCS order for coordinated transmission, and a transport layer quantity for coordinated transmission, the coordinated transmission scheduling information is determined based on the N pieces of initial scheduling information, and the first indication information indicates information about the N network devices;
the receiving module is further configured to receive downlink data of M network devices on the time-frequency resource for coordinated transmission; and
the sending module is further configured to send uplink data on the time-frequency resource for coordinated transmission, wherein
N is an integer greater than 1, M is an integer greater than or equal to N, and the M network devices comprise the N network devices.

20. The apparatus according to claim 19, wherein
the receiving module is specifically configured to receive N pieces of downlink control information DCI from the N network devices, wherein one of the N pieces of DCI is from one of the N network devices, and the DCI comprises the initial scheduling information.

21. The apparatus according to claim 20, wherein
the DCI further comprises second indication information, and the second indication information indicates that the DCI comprises the initial scheduling information.

22. The apparatus according to claim 21, wherein
the DCI further comprises third indication information, and the third indication information indicates that the initial scheduling information is scheduling information of coherent joint transmission CJT or scheduling information of coherent joint reception CJR.

23. The apparatus according to any one of claims 20 to 22, wherein that the first indication information indicates information about the N network devices comprises: the first indication information indicates indexes of N control resource set pools corresponding to the N pieces of DCI of the N network devices.

24. The apparatus according to any one of claims 19 to 23, wherein
the sending module is specifically configured to send uplink control information UCI, wherein the UCI comprises the coordinated transmission scheduling information and the first indication information.

25. The apparatus according to claim 24, wherein
the UCI is carried on an uplink time-frequency resource, and the uplink time-frequency resource is a time-frequency resource scheduled in a static or semi-persistent manner.

26. The apparatus according to any one of claims 19 to 25, wherein that the coordinated transmission scheduling information is determined based on the N pieces of initial scheduling information comprises:
the time-frequency resource for coordinated transmission in the coordinated transmission scheduling information is determined based on an intersection set or a union set of N initial time-frequency resources in the N pieces of initial scheduling information;
the MCS order for coordinated transmission in the coordinated transmission scheduling information is a largest value in N initial MCS orders in the N pieces of initial scheduling information; and
the transport layer quantity for coordinated transmission in the coordinated transmission scheduling information is a largest value in N initial transport layer quantities in the N pieces of initial scheduling information.

27. The apparatus according to any one of claims 19 to 26, wherein
the receiving module is specifically configured to: when the N pieces of initial scheduling information are used for CJT, receive, on the time-frequency resource for coordinated transmission, same downlink data sent by the M network devices; and
the sending module is specifically configured to: when the N pieces of initial scheduling information are used for CJR, send the uplink data on the time-frequency resource for coordinated transmission.

28. A communication apparatus for data scheduling in coordinated transmission, comprising a sending module and a receiving module, wherein
the sending module is configured to send initial scheduling information to a terminal device, wherein the coordinated transmission scheduling information comprises a time-frequency resource for coordinated transmission, an MCS order for coordinated transmission, and a transport layer quantity for coordinated transmission;
the receiving module is configured to receive the coordinated transmission scheduling information and first indication information from the terminal device, wherein the coordinated transmission scheduling information comprises the time-frequency resource for coordinated transmission, the MCS order for coordinated transmission, and the transport layer quantity for coordinated transmission, the coordinated transmission scheduling information is determined based on N pieces of initial scheduling information, one of the N pieces of initial scheduling information is from one of N network devices, the N pieces of initial scheduling information are in one-to-one correspondence with the N network devices, and the first indication information indicates information about the N network devices;
the sending module is further configured to send downlink data to the terminal device on the time-frequency resource for coordinated transmission; and
the receiving module is further configured to receive uplink data from the terminal device on the time-frequency resource for coordinated transmission, wherein
N is an integer greater than 1, the apparatus is one of M network devices, M is an integer greater than or equal to N, and the M network devices comprise the N network devices.

29. The apparatus according to claim 28, wherein
the sending module is specifically configured to send downlink control information DCI to the terminal device, wherein the DCI comprises the initial scheduling information.

30. The apparatus according to claim 29, wherein
the DCI further comprises second indication information, and the second indication information indicates that the DCI comprises the initial scheduling information.

31. The apparatus according to claim 30, wherein
the DCI further comprises third indication information, and the third indication information indicates that the initial scheduling information is scheduling information of coherent joint transmission CJT or scheduling information of coherent joint reception CJR.

32. The apparatus according to any one of claims 29 to 31, wherein that the first indication information indicates information about the N network devices comprises: the first indication information indicates indexes of N control resource set pools corresponding to N pieces of DCI of the N network devices.

33. The apparatus according to any one of claims 28 to 32, wherein
the receiving module is specifically configured to receive uplink control information UCI from the terminal device, wherein the UCI comprises the coordinated transmission scheduling information and the first indication information.

34. The apparatus according to claim 33, wherein
the UCI is carried on an uplink time-frequency resource, and the uplink time-frequency resource is a time-frequency resource scheduled by the apparatus for the terminal device in a static or semi-persistent manner.

35. The apparatus according to any one of claims 28 to 34, wherein that the coordinated transmission scheduling information is determined based on N pieces of initial scheduling information comprises:
the time-frequency resource for coordinated transmission in the coordinated transmission scheduling information is determined based on an intersection set or a union set of N initial time-frequency resources in the N pieces of initial scheduling information;
the MCS order for coordinated transmission in the coordinated transmission scheduling information is a largest value in N initial MCS orders in the N pieces of initial scheduling information; and
the transport layer quantity for coordinated transmission in the coordinated transmission scheduling information is a largest value in N initial transport layer quantities in the N pieces of initial scheduling information.

36. The apparatus according to any one of claims 28 to 35, wherein
the sending module is specifically configured to: when the initial scheduling information is used for CJT, send the downlink data to the terminal device on the time-frequency resource for coordinated transmission; and
the receiving module is specifically configured to: when the initial scheduling information is used for CJR, receive the uplink data from the terminal device on the time-frequency resource for coordinated transmission.

37. A data scheduling system for coordinated transmission, comprising a plurality of network devices, wherein the plurality of network devices are used in the apparatus according to any one of claims 28 to 36.

38. The system according to claim 37, wherein
when the plurality of network devices transmit downlink data to a terminal device, the plurality of network devices send same downlink data to the terminal device on a time-frequency resource for coordinated transmission; or
when a terminal device transmits uplink data to the plurality of network devices, the network devices receive the uplink data from the terminal device on a time-frequency resource for coordinated transmission.

39. A communication apparatus for data scheduling in coordinated transmission, wherein the apparatus comprises a processor, the processor is coupled to a memory, the memory stores instructions, and when the instructions are run by the processor,
the processor is enabled to perform the method according to any one of claims 1 to 9, or
the processor is enabled to perform the method according to any one of claims 10 to 18.

40. A communication apparatus for data scheduling in coordinated transmission, wherein the apparatus comprises a logic circuit and an input/output interface, the logic circuit is configured to: be coupled to the input/output interface, and perform data transmission through the input/output interface, to perform the method according to any one of claims 1 to 9, or to perform the method according to any one of claims 10 to 18.

41. A computer-readable storage medium, wherein the computer-readable storage medium is configured to store a computer program, and when the computer program is run on a computer, the computer is enabled to perform the method according to any one of claims 1 to 9, or the computer is enabled to perform the method according to any one of claims 10 to 18.

42. A computer program product, wherein the computer program product comprises computer program code, and when the computer program code is run, the method according to any one of claims 1 to 9 is implemented, or the method according to any one of claims 10 to 18 is implemented.

43. A chip, comprising a processor and a memory, wherein the memory is configured to store a computer program, and the processor is configured to: invoke and run the computer program stored in the memory, to perform the method according to any one of claims 1 to 9, or implement the method according to any one of claims 10 to 18.
